(19) Europäisches Patentamt
European Patent Office
Office européen des brevets

(11) **EP 4 761 132 A1**

(12) **EUROPEAN PATENT APPLICATION**
published in accordance with Art. 153(4) EPC

(43) Date of publication:
**17.06.2026 Bulletin 2026/25**

(21) Application number: **24858074.8**

(22) Date of filing: **09.07.2024**

(51) International Patent Classification (IPC):
**H04B 7/06** (2006.01)

(52) Cooperative Patent Classification (CPC):
**H04B 7/06; H04B 7/08; H04B 7/185**

(86) International application number:
**PCT/CN2024/104450**

(87) International publication number:
**WO 2025/044530 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.08.2023 CN 202311095135**

(71) Applicant: **HUAWEI TECHNOLOGIES CO., LTD.**
**Shenzhen 518129 (CN)**

(72) Inventors:
• **ZHENG, Haina**
**Shenzhen, Guangdong 518129 (CN)**

• **YAO, Chuting**
**Shenzhen, Guangdong 518129 (CN)**
• **XUE, Lixia**
**Shenzhen, Guangdong 518129 (CN)**
• **FAN, Liangliang**
**Shenzhen, Guangdong 518129 (CN)**
• **XU, Haibo**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **SATELLITE ALIGNMENT METHOD, TERMINAL DEVICE AND COMPUTER-READABLE STORAGE MEDIUM**

(57) This application provides a satellite alignment method, a terminal device, and a computer-readable storage medium, and relates to the field of satellite communication technologies. In this application, locations of a satellite that needs to be aligned with at different moments and phase differences of a signal arriving at antenna elements of the terminal device at different moments can be obtained based on ephemeris information, and a beam is generated based on the phase difference of the signal arriving at the antenna elements, so that the generated beam is directed to the locations of the satellite at different moments, and a radiation direction of the antenna element of the terminal device is automatically aligned with the satellite, to improve alignment efficiency. In addition, alignment accuracy can be improved, and effective communication between the terminal device and the satellite is enhanced.

During initial alignment, determine a first location of a target satellite based on satellite ephemeris information sent by an access network device — S401

Obtain a first phase difference based on the satellite ephemeris information — S402

Generate a first beam based on the first phase difference — S403

FIG. 4

## Description

This application claims priority to Chinese Patent Application No. 202311095135.6, filed with the China National Intellectual Property Administration on August 28, 2023 and entitled "SATELLITE ALIGNMENT METHOD, TERMINAL DEVICE, AND COMPUTER-READABLE STORAGE MEDIUM", which is incorporated herein by reference in its entirety.

## TECHNICAL FIELD

This application relates to the field of satellite communication technologies, and in particular, to a satellite alignment method, a terminal device, and a computer-readable storage medium.

## BACKGROUND

Satellite communication has a wider coverage area than a terrestrial cellular network, is characterized by long communication distances, low requirements on ground station deployment, and so on, and is not affected by geographical environments, natural disasters, and climate conditions. Therefore, the satellite communication has been widely applied to aerospace, maritime communication, and other fields.

In a satellite communication system, because a satellite is far away and a link budget is limited, a radiation direction of an antenna of a terrestrial terminal needs to be aligned with the satellite, to improve transmit and receive antenna gains of the terrestrial terminal as much as possible, so that a communication connection between the terrestrial terminal and the satellite is more stable, reliable, and efficient. Most satellites in existing satellite communication are high earth orbit satellites. A location of the high earth orbit satellite is fixed, so that the terrestrial terminal can be aligned with the satellite through a manual operation. With development of communication of a low earth orbit satellite, the terrestrial terminal needs to be aligned with the low earth orbit satellite for communication. Because the low earth orbit satellite moves at a high velocity, efficiency of manual alignment between a conventional terrestrial terminal and the satellite in an alignment process is low.

## SUMMARY

This application provides a satellite alignment method, a terminal device, and a computer-readable storage medium, so that a radiation direction of an antenna element of a terminal device can be automatically aligned with a satellite, to improve alignment efficiency, and enhance satellite communication performance.

To achieve the foregoing objective, this application uses the following technical solutions.

According to a first aspect, a satellite alignment method is provided, and is applied to a terminal device. The method includes: obtaining satellite ephemeris information; obtaining a first location of a target satellite based on the satellite ephemeris information; obtaining a first phase difference based on the satellite ephemeris information; and generating a first beam based on the first phase difference, where the first beam is directed to the first location.

According to this solution, the terminal device may determine, based on the satellite ephemeris information, a phase difference for generating a beam, to complete automatic alignment, improve alignment efficiency, and further improve alignment accuracy.

For example, the satellite ephemeris information includes an orbit inclination angle of an orbit of a satellite, an eccentricity of the orbit, a right ascension of the ascending node of the orbit of the satellite, an argument of periapsis, a mean anomaly, an average motion velocity, a first-order time derivative of the average motion velocity, and a second-order time derivative of the average motion velocity.

For example, the first location of the target satellite is a location of the target satellite in an earth coordinate system at a first moment.

For example, a location of each satellite in the earth coordinate system at the first moment is associated with a semi-major axis of an orbit of the satellite at the first moment, an eccentricity of the orbit, and a true anomaly of the satellite in the orbit at the first moment. The true anomaly of the satellite in the orbit at the first moment is associated with a mean anomaly of the satellite in the orbit at the first moment. The mean anomaly of the satellite in the orbit at the first moment is associated with an average motion velocity of the satellite in the orbit at the first moment. The average motion velocity of the satellite in the orbit at the first moment is associated with the semi-major axis of the orbit of the satellite at the first moment. The average motion velocity of the satellite in the orbit at the first moment is obtained by correcting an average motion velocity in ephemeris information of the satellite.

For example, the target satellite is a satellite that needs to be aligned with.

For example, the first phase difference is a phase difference of a signal arriving at antenna elements of the terminal device at the first moment. The signal may be a signal sent by the terminal device to the target satellite, or may be a signal sent by the target satellite to the terminal device.

According to the solution provided in the first aspect, a location of the target satellite and the phase difference of the signal arriving at the antenna elements may be obtained based on the satellite ephemeris information, and the beam is generated based on the phase difference of the signal arriving at the antenna elements, so that the generated beam is directed to the location of the target satellite, and a radiation direction of the terminal antenna element is automatically aligned with the satellite, to improve alignment efficiency and alignment accuracy, and enhance effective communication with the satellite.

In a possible implementation, the obtaining the first phase difference based on the satellite ephemeris information includes: obtaining the first phase difference based on pose information of the terminal device and the satellite ephemeris information, where the first phase difference is associated with a beam direction azimuth and a beam direction elevation that are required for the first beam; and the beam direction azimuth and the beam direction elevation that are required for the first beam are associated with the pose information of the terminal device and the first location. In this way, the first location of the target satellite is obtained based on the satellite ephemeris information, the beam direction azimuth and the beam direction elevation that are required for the first beam are obtained based on the pose information of the terminal device and the first location of the target satellite, and the first phase difference required for generating the first beam is obtained based on the beam direction azimuth and the beam direction elevation that are required for the first beam. Therefore, after the first phase difference is applied to the antenna elements, the first beam generated by the antenna element can be directed to the first location of the target satellite, to improve alignment efficiency and accuracy.

In a possible implementation, at least four antenna elements are configured for the terminal device, the at least four antenna elements are symmetrically disposed in a first direction and a second direction, and the first direction and the second direction are perpendicular to each other. That the first phase difference is associated with the beam direction azimuth and the beam direction elevation that are required for the first beam includes: A first phase offset of a signal arriving at antenna elements in the first direction is associated with a spacing between any two adjacent antenna elements in the first direction, the beam direction azimuth, and a wavelength of the signal; and a second phase offset of the signal arriving at antenna elements in the second direction is associated with a spacing between any two adjacent antenna elements in the second direction, the beam direction elevation, and the wavelength of the signal, where the first phase difference includes the first phase offset and the second phase offset.

For example, the first phase offset represents a phase difference of the signal arriving at antenna elements in the first direction, and the second phase offset represents a phase difference of the signal arriving at antenna elements in the second direction.

For example, two adjacent antenna elements in the first direction are at an equal spacing, and two adjacent antenna elements in the second direction are at an equal spacing.

For example, after the first phase offset and the second phase offset are obtained, the phase difference of the signal arriving at the antenna elements in the first direction is adjusted to the first phase offset, so that an azimuth of the first beam generated by the antenna element is the required beam direction azimuth. The phase difference of the signal arriving at the antenna elements in the second direction is adjusted to the second phase offset, so that an elevation of the first beam generated by the antenna element is the required beam direction elevation. When the azimuth of the first beam generated by the antenna element is the required beam direction azimuth, and the elevation is the required beam direction elevation, the first beam is directed to the first location of the target satellite. In this way, the phase difference of the signal arriving at the antenna elements in the first direction and the phase difference of the signal arriving at the antenna elements in the second direction are adjusted based on the required beam direction azimuth and the required beam direction elevation, so that the first beam generated by the antenna element can be directed to the first location of the target satellite. In this way, the radiation direction of the antenna element of the terminal device is automatically aligned with a satellite, causing high alignment accuracy and high alignment efficiency.

In a possible implementation, at least two antenna elements are configured for the terminal device, the at least two antenna elements are located in a same straight line, and the first phase difference is a phase difference of a signal arriving at the antenna elements. That the first phase difference is associated with the beam direction azimuth and the beam direction elevation that are required for the first beam includes: The first phase difference is associated with a spacing between any two adjacent antenna elements, a first angle, and a wavelength of the signal, where the first angle is the beam direction azimuth or the beam direction elevation. In this way, the phase difference of the signal arriving at the antenna elements is determined based on the required beam direction azimuth or the required beam direction elevation. An automatic adjustment of a direction angle of a beam is implemented by adjusting the phase difference of the signal arriving at the antenna elements, and efficiency is high.

In a possible implementation, the generating the first beam based on the first phase difference includes: generating an initial beam based on the first phase difference; notifying a user of a second angle, where when the first angle is the beam direction azimuth, the second angle is the beam direction elevation; or when the first angle is the beam direction elevation, the second angle is the beam direction azimuth; and receiving an adjustment performed by the user on a direction angle of the initial beam based on the second angle, to obtain the first beam. In this way, an automatic adjustment of the direction angle of the beam is implemented by adjusting the phase difference of the signal arriving at the antenna elements, and the direction angle of the beam is corrected by prompting the user and with reference to a user operation, thereby improving alignment efficiency while ensuring alignment accuracy.

In a possible implementation, the pose information of the terminal device includes a terminal location, an azimuth, and an elevation of the terminal device. That the beam direction azimuth and the beam direction elevation that are required for the first beam are associated with the pose information of the terminal device and the first location includes: A relative location of the target satellite relative to the terminal device is associated with the terminal location of the terminal device and the first location of the target satellite; and an angle conversion relationship exists between a relative azimuth and a relative elevation of the target satellite relative to the terminal device and the relative location, where the beam direction azimuth is a difference between the relative azimuth and the azimuth of the terminal device, and the beam direction elevation is a difference between the relative elevation and the elevation of the terminal device. In this way, the beam direction azimuth and the beam direction elevation that are required for the first beam are obtained based on the terminal location, the azimuth, and the elevation of the terminal device, and the first location of the target satellite. The beam direction azimuth and the beam direction elevation that are required for the beam can be accurately obtained. In addition, accuracy of the first phase difference determined based on the beam direction azimuth and the beam direction elevation can be improved. Therefore, after the phase difference of the signal arriving at the antenna elements is adjusted based on the first phase difference, the beam generated by the antenna element may be directed to the target satellite.

In a possible implementation, the satellite ephemeris information includes ephemeris information of the target satellite. The method further includes: obtaining motion information of the target satellite based on the ephemeris information of the target satellite; obtaining a second location of the target satellite at a second moment based on the ephemeris information of the target satellite, where the second location is associated with the motion information of the target satellite, the second moment is any moment after a first moment, and a location of the target satellite at the first moment is the first location; obtaining a second phase difference at the second moment based on the ephemeris information of the target satellite; and generating a second beam based on the second phase difference, where the second beam is directed to the second location at the second moment. In this way, locations of the target satellite at different moments can be obtained based on the ephemeris information of the target satellite, and phase differences that need to be adjusted when the signal arrives at the antenna elements at different moments are obtained based on the locations of the target satellite at the different moments. Therefore, the beam of the antenna element is adjusted based on the phase differences that need to be adjusted when the signal arrives at the antenna elements at the different moments, so that the beam generated by the antenna element can be always directed to the target satellite, to implement automatic satellite alignment and tracking of the target satellite, improve alignment efficiency, and improve user experience while ensuring communication quality.

In a possible implementation, the satellite ephemeris information is sent by the target satellite to the terminal device through a non-terrestrial network.

For example, after the target satellite establishes a communication connection to the terminal device, the terminal device may send an ephemeris information request to the target satellite based on a specified time step, to request to obtain the satellite ephemeris information. The satellite ephemeris information may be updated ephemeris information of the target satellite.

For example, after the target satellite establishes a communication connection to the terminal device, the target satellite may send indication information to the terminal device based on a specified time step. The indication information includes the satellite ephemeris information. The satellite ephemeris information may be updated ephemeris information of the target satellite.

In this way, during tracking of the target satellite, the terminal device can obtain updated ephemeris information sent by the target satellite for correcting the location of the target satellite and the generated beam, so that in a process in which the terminal device communicates with the satellite, the generated beam can be always directed to the target satellite, to improve satellite alignment accuracy, ensure communication quality, and improve user experience.

In a possible implementation, the satellite ephemeris information includes ephemeris information of a plurality of satellites. The obtaining the first location of the target satellite based on the satellite ephemeris information includes: determining the target satellite and the first location of the target satellite from the plurality of satellites based on the satellite ephemeris information, where the target satellite is a satellite in the plurality of satellites that meets a preset condition, and the preset condition includes one or more of the following conditions: having a closest distance to the terminal device, a signal received by the terminal device being strongest, and having a historical record of alignment with the terminal device. In this way, the target satellite is determined and obtained from the plurality of satellites based on the preset condition, and a most adaptive target satellite may be automatically determined for the terminal device without depending on an external device. In this way, satellite communication quality can be improved.

In a possible implementation, the satellite ephemeris information is sent by an access network device to the terminal device through a terrestrial network. In this way, when having a requirement of aligning a satellite, the terminal device can perform satellite alignment based on the satellite ephemeris information sent by the access network device, so that the radiation direction of the antenna element of the terminal device is automatically aligned with the satellite, to improve alignment efficiency.

According to a second aspect, a terminal device is provided. The terminal device is configured to: obtain satellite ephemeris information; obtain a first location of a target satellite based on the satellite ephemeris information; obtain a first phase difference based on the satellite ephemeris information; and generate a first beam based on the first phase difference, where the first beam is directed to the first location.

For example, the satellite ephemeris information includes an orbit inclination angle of an orbit of a satellite, an eccentricity of the orbit, a right ascension of the ascending node of the orbit of the satellite, an argument of periapsis, a mean anomaly, an average motion velocity, a first-order time derivative of the average motion velocity, and a second-order time derivative of the average motion velocity.

For example, the first location of the target satellite is a location of the target satellite in an earth coordinate system at a first moment.

For example, a location of each satellite in the earth coordinate system at the first moment is associated with a semi-major axis of an orbit of the satellite at the first moment, an eccentricity of the orbit, and a true anomaly of the satellite in the orbit at the first moment. The true anomaly of the satellite in the orbit at the first moment is associated with a mean anomaly of the satellite in the orbit at the first moment. The mean anomaly of the satellite in the orbit at the first moment is associated with an average motion velocity of the satellite in the orbit at the first moment. The average motion velocity of the satellite in the orbit at the first moment is associated with the semi-major axis of the orbit of the satellite at the first moment. The average motion velocity of the satellite in the orbit at the first moment is obtained by correcting an average motion velocity in ephemeris information of the satellite. For example, the target satellite is a satellite that needs to be aligned with.

For example, the first phase difference is a phase difference of a signal arriving at antenna elements of the terminal device at the first moment. The signal may be a signal sent by the terminal device to the target satellite, or may be a signal sent by the target satellite to the terminal device.

According to the solution provided in the second aspect, a location of the target satellite and the phase difference of the signal arriving at the antenna elements may be obtained based on the satellite ephemeris information, and a beam is generated based on the phase difference of the signal arriving at the antenna elements, so that the generated beam is directed to the location of the target satellite, and a radiation direction of the terminal antenna element is automatically aligned with the satellite, to improve alignment efficiency and alignment accuracy, and enhance effective communication with the satellite.

In a possible implementation, the terminal device is configured to: obtain the first phase difference based on pose information of the terminal device and the satellite ephemeris information, where the first phase difference is associated with a beam direction azimuth and a beam direction elevation that are required for the first beam; and the beam direction azimuth and the beam direction elevation that are required for the first beam are associated with the pose information of the terminal device and the first location. In this way, the first location of the target satellite is obtained based on the satellite ephemeris information, the beam direction azimuth and the beam direction elevation that are required for the first beam are obtained based on the pose information of the terminal device and the first location of the target satellite, and the first phase difference required for generating the first beam is obtained based on the beam direction azimuth and the beam direction elevation that are required for the first beam. Therefore, after the first phase difference is applied to the antenna elements, the first beam generated by the antenna element can be directed to the first location of the target satellite, to improve alignment efficiency and accuracy.

In a possible implementation, at least four antenna elements are configured for the terminal device, the at least four antenna elements are symmetrically disposed in a first direction and a second direction, and the first direction and the second direction are perpendicular to each other. That the first phase difference is associated with the beam direction azimuth and the beam direction elevation that are required for the first beam includes: A first phase offset of a signal arriving at antenna elements in the first direction is associated with a spacing between any two adjacent antenna elements in the first direction, the beam direction azimuth, and a wavelength of the signal; and a second phase offset of the signal arriving at antenna elements in the second direction is associated with a spacing between any two adjacent antenna elements in the second direction, the beam direction elevation, and the wavelength of the signal, where the first phase difference includes the first phase offset and the second phase offset.

For example, the first phase offset represents a phase difference of the signal arriving at antenna elements in the first direction, and the second phase offset represents a phase difference of the signal arriving at antenna elements in the second direction.

For example, two adjacent antenna elements in the first direction are at an equal spacing, and two adjacent antenna elements in the second direction are at an equal spacing.

For example, after the first phase offset and the second phase offset are obtained, the phase difference of the signal arriving at the antenna elements in the first direction is adjusted to the first phase offset, so that an azimuth of the first beam generated by the antenna element is the required beam direction azimuth. The phase difference of the signal arriving at the antenna elements in the second direction is adjusted to the second phase offset, so that an elevation of the first beam generated by the antenna element is the required beam direction elevation. When the azimuth of the first beam generated by the antenna element is the required beam direction azimuth, and the elevation is the required beam direction elevation, the first beam is directed to the first location of the target satellite. In this way, the phase difference of the signal arriving at the antenna elements in the first direction and the phase difference of the signal arriving at the antenna elements in the second direction are adjusted based on the required beam direction azimuth and the required beam direction elevation, so that the first beam generated by the antenna element can be directed to the first location of the target satellite. In this way, the radiation direction of the antenna element of the terminal device is automatically aligned with a satellite, causing high alignment accuracy and high alignment efficiency.

In a possible implementation, at least two antenna elements are configured for the terminal device, the at least two antenna elements are located in a same straight line, and the first phase difference is a phase difference of a signal arriving at the antenna elements. That the first phase difference is associated with the beam direction azimuth and the beam direction elevation that are required for the first beam includes: The first phase difference is associated with a spacing between any two adjacent antenna elements, a first angle, and a wavelength of the signal, where the first angle is the beam direction azimuth or the beam direction elevation. In this way, the phase difference of the signal arriving at the antenna elements is determined based on the required beam direction azimuth or the required beam direction elevation. An automatic adjustment of a direction angle of a beam is implemented by adjusting the phase difference of the signal arriving at the antenna elements, and efficiency is high.

In a possible implementation, the terminal device is configured to: generate an initial beam based on the first phase difference; notify a user of a second angle, where when the first angle is the beam direction azimuth, the second angle is the beam direction elevation; or when the first angle is the beam direction elevation, the second angle is the beam direction azimuth; and receive an adjustment performed by the user on a direction angle of the initial beam based on the second angle, to obtain the first beam. In this way, an automatic adjustment of the direction angle of the beam is implemented by adjusting the phase difference of the signal arriving at the antenna elements, and the direction angle of the beam is corrected by prompting the user and with reference to a user operation, thereby improving alignment efficiency while ensuring alignment accuracy.

In a possible implementation, the pose information of the terminal device includes a terminal location, an azimuth, and an elevation of the terminal device. That the beam direction azimuth and the beam direction elevation that are required for the first beam are associated with the pose information of the terminal device and the first location includes: A relative location of the target satellite relative to the terminal device is associated with the terminal location of the terminal device and the first location of the target satellite; and an angle conversion relationship exists between a relative azimuth and a relative elevation of the target satellite relative to the terminal device and the relative location, where the beam direction azimuth is a difference between the relative azimuth and the azimuth of the terminal device, and the beam direction elevation is a difference between the relative elevation and the elevation of the terminal device. In this way, the beam direction azimuth and the beam direction elevation that are required for the first beam are obtained based on the terminal location, the azimuth, and the elevation of the terminal device, and the first location of the target satellite. The beam direction azimuth and the beam direction elevation that are required for the beam can be accurately obtained. In addition, accuracy of the first phase difference determined based on the beam direction azimuth and the beam direction elevation can be improved. Therefore, after the phase difference of the signal arriving at the antenna elements is adjusted based on the first phase difference, the beam generated by the antenna element may be directed to the target satellite.

In a possible implementation, the satellite ephemeris information includes ephemeris information of the target satellite. The terminal device is further configured to: obtain motion information of the target satellite based on the ephemeris information of the target satellite; obtain a second location of the target satellite at a second moment based on the ephemeris information of the target satellite, where the second location is associated with the motion information of the target satellite, the second moment is any moment after a first moment, and a location of the target satellite at the first moment is the first location; obtain a second phase difference at the second moment based on the ephemeris information of the target satellite; and generate a second beam based on the second phase difference, where the second beam is directed to the second location at the second moment. In this way, locations of the target satellite at different moments can be obtained based on the ephemeris information of the target satellite, and phase differences that need to be adjusted when the signal arrives at the antenna elements at different moments are obtained based on the locations of the target satellite at the different moments. Therefore, the beam of the antenna element is adjusted based on the phase differences that need to be adjusted when the signal arrives at the antenna elements at the different moments, so that the beam generated by the antenna element can be always directed to the target satellite, to implement automatic satellite alignment and tracking of the target satellite, improve alignment efficiency, and improve user experience while ensuring communication quality.

In a possible implementation, the satellite ephemeris information is sent by the target satellite to the terminal device through a non-terrestrial network.

For example, after the target satellite establishes a communication connection to the terminal device, the terminal device may send an ephemeris information request to the target satellite based on a specified time step, to request to obtain the satellite ephemeris information. The satellite ephemeris information may be updated ephemeris information of the target satellite.

For example, after the target satellite establishes a communication connection to the terminal device, the target satellite may send indication information to the terminal device based on a specified time step. The indication information includes the satellite ephemeris information. The satellite ephemeris information may be updated ephemeris information of the target satellite.

In this way, during tracking of the target satellite, the terminal device can obtain updated ephemeris information sent by the target satellite for correcting the location of the target satellite and the generated beam, so that in a process in which the terminal device communicates with the satellite, the generated beam can be always directed to the target satellite, to improve satellite alignment accuracy, ensure communication quality, and improve user experience.

In a possible implementation, the satellite ephemeris information includes ephemeris information of a plurality of satellites. The terminal device is configured to: determine the target satellite and the first location of the target satellite from the plurality of satellites based on the satellite ephemeris information, where the target satellite is a satellite in the plurality of satellites that meets a preset condition, and the preset condition includes one or more of the following conditions: having a closest distance to the terminal device, a signal received by the terminal device being strongest, and having a historical record of alignment with the terminal device. In this way, the target satellite is determined and obtained from the plurality of satellites based on the preset condition, and a most adaptive target satellite may be automatically determined for the terminal device without depending on an external device. In this way, satellite communication quality can be improved.

In a possible implementation, the satellite ephemeris information is sent by an access network device to the terminal device through a terrestrial network. In this way, when having a requirement of aligning a satellite, the terminal device can perform satellite alignment based on the satellite ephemeris information sent by the access network device, so that the radiation direction of the antenna element of the terminal device is automatically aligned with the satellite, to improve alignment efficiency.

According to a third aspect, a terminal device is provided. The terminal device includes a processor, configured to execute computer program instructions, to support the terminal device in implementing the method according to any one of the possible implementations of the first aspect. Optionally, the terminal device further includes: a communication interface, configured to communicate with another electronic device; and/or a memory, configured to store the computer program instructions.

According to a fourth aspect, an electronic device is provided. The electronic device includes: a communication interface, configured to communicate with another electronic device; a memory, configured to store computer program instructions; and a processor, configured to execute the computer program instructions, to support the electronic device in implementing the method according to any one of the possible implementations of the first aspect.

According to a fifth aspect, a computer-readable storage medium is provided. The computer-readable storage medium stores computer program instructions, and when the computer program instructions are executed by a processing circuit, the method according to any one of the possible implementations of the first aspect is implemented.

According to a sixth aspect, a computer program product including instructions is provided. When the computer program product runs on a computer, the computer is caused to perform the method according to any one of the possible implementations of the first aspect.

According to a seventh aspect, a chip system is provided. The chip system includes a processing circuit and a storage medium. The storage medium stores computer program instructions. When the computer program instructions are executed by the processing circuit, the method according to any one of the possible implementations of the first aspect is implemented.

According to an eighth aspect, a terminal device is provided, and is configured to perform the method according to any one of the possible implementations of the first aspect.

**BRIEF DESCRIPTION OF DRAWINGS**

FIG. 1 is a diagram of an architecture of a satellite communication system according to an embodiment of this application;
FIG. 2 is a diagram of information exchange according to an embodiment of this application;
FIG. 3 is a diagram of a structure of a terminal device according to an embodiment of this application;
FIG. 4 is a schematic flowchart 1 of a satellite alignment method according to an embodiment of this application;
FIG. 5 is a diagram of an earth coordinate system according to an embodiment of this application;
FIG. 6 is a diagram 1 of a structure of an antenna element according to an embodiment of this application;
FIG. 7 is a diagram 2 of a structure of an antenna element according to an embodiment of this application;
FIG. 8 is a diagram 3 of a structure of an antenna element according to an embodiment of this application;
FIG. 9 is a diagram of a direction according to an embodiment of this application;

FIG. 10 is a schematic flowchart 2 of a satellite alignment method according to an embodiment of this application;

FIG. 11 is a diagram 1 of a display interface according to an embodiment of this application;

FIG. 12 is a diagram 2 of a display interface according to an embodiment of this application;

FIG. 13 is a schematic flowchart 3 of a satellite alignment method according to an embodiment of this application; and

FIG. 14 is a schematic flowchart 4 of a satellite alignment method according to an embodiment of this application.

## DESCRIPTION OF EMBODIMENTS

The following describes technical solutions in embodiments of this application with reference to accompanying drawings in embodiments of this application.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

The following terms "first" and "second" are merely intended for description, and cannot be understood as an indication or implication of relative importance or an implicit indication of a quantity of indicated technical features. Therefore, a feature limited by the "first", the "second", or the like may explicitly or implicitly include one or more features.

In embodiments of this application, the word such as "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner.

In the descriptions of embodiments of this application, unless otherwise stated, "a plurality of' means two or more. "And/or" in this specification describes only an association relationship between associated objects and indicates that there may be three relationships. For example, A and/or B may indicate the following three cases: Only A exists, both A and B exist, and only B exists.

As described in the background, satellite communication has a wider coverage area than a terrestrial cellular network, is characterized by long communication distances, low requirements on ground station deployment, and so on, and is not affected by geographical environments, natural disasters, and climate conditions. Therefore, the satellite communication has been widely applied to aerospace, maritime communication, and other fields.

Generally, satellite communication systems are usually classified into a geostationary earth orbit (geostationary earth orbit, GEO) satellite communication system, a medium earth orbit (medium earth orbit, MEO) satellite communication system, and a low earth orbit (low earth orbit, LEO) satellite communication system based on satellite orbital altitudes. An orbital altitude of the GEO satellite communication system is 35,786 kilometers. A motion direction of a satellite is the same as the rotation direction of the earth, and an orbital plane overlaps the equatorial plane of the earth. From the ground, the satellite is stationary in the air. A satellite in the LEO satellite communication system is at an altitude of 500 to 2,000 kilometers above the ground. From the ground, an area covered by the satellite moves at a high velocity. A satellite in the MEO satellite communication system is at an altitude of 2,000 to 35,786 kilometers above the ground. From the ground, an area covered by the satellite moves. The LEO system and the MEO system may be collectively referred to as a non-geostationary earth orbit communication system.

In a satellite communication scenario, a satellite running in a geostationary earth orbit may also be referred to as a high earth orbit satellite. Correspondingly, a satellite running in a low earth orbit may be referred to as a low earth orbit satellite, and a satellite running in a medium earth orbit may be referred to as a medium earth orbit satellite.

In a satellite communication system, because a satellite is far away and a link budget is limited, a radiation direction of an antenna of a terrestrial terminal needs to be aligned with the satellite, to improve transmit and receive antenna gains of the terrestrial terminal as much as possible, so that a communication connection between the terrestrial terminal and the satellite is more stable, reliable, and efficient. Most satellites in existing satellite communication are high earth orbit satellites. Because a location of the high earth orbit satellite is fixed, when the terrestrial terminal is aligned with the satellite, a user is guided, based on the location of the high earth orbit satellite and a location of the terrestrial terminal, to manually align the antenna of the terrestrial terminal with the high earth orbit satellite, so that the radiation direction of the antenna of the terrestrial terminal can be aligned with the satellite. It is simple to operate.

With development of communication of a low earth orbit satellite, the terrestrial terminal needs to be aligned with the low earth orbit satellite for communication. However, because the low earth orbit satellite moves at a high velocity, the motion of the low earth orbit satellite cannot be easily followed in a commonly used manual alignment manner, causing poor alignment accuracy and low alignment efficiency. In addition, during satellite communication, to ensure communication quality, the user needs to adjust the alignment between the terrestrial terminal and the satellite during the communication, but it is very inconvenient for the user to simultaneously perform the communication and the satellite alignment, resulting in bad user experience.

Based on the foregoing problem, embodiments of this application provide a satellite alignment method. A location of a satellite that needs to be aligned with and a phase difference of a signal arriving at antenna elements may be obtained based on ephemeris information, and a beam is generated based on the phase difference of the signal arriving at the antenna elements, so that the generated beam is directed to the location of the satellite, and a radiation direction of an antenna element of a terminal device is automatically aligned with the satellite, to improve alignment efficiency and alignment accuracy, and improve user experience while enhancing satellite communication performance.

The satellite alignment method provided in embodiments of this application may be applied to a satellite communication system. The satellite communication system may be a GEO satellite communication system, an MEO satellite communication system, an LEO satellite communication system, or the like.

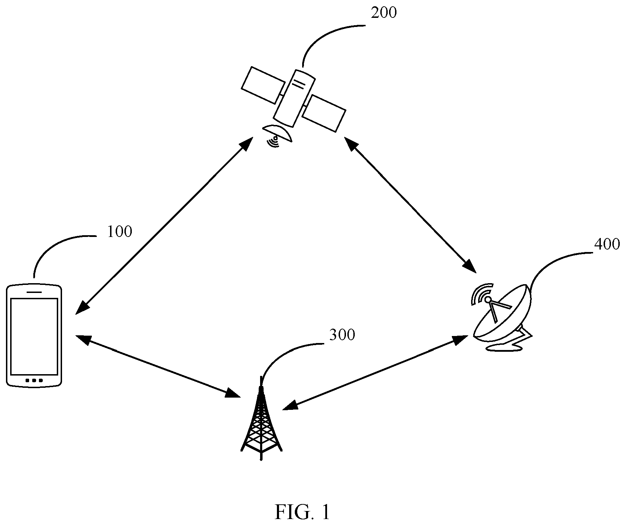

Refer to FIG. 1. A satellite communication system includes a terminal device 100, a satellite 200, an access network device 300, and a satellite network device 400. The terminal device 100 may establish communication connections to the satellite 200 and the access network device 300, the satellite 200 may establish a communication connection to the satellite network device 400, and the satellite network device 400 may establish a communication connection to the access network device 300.

The terminal device 100 that establishes the communication connection may exchange information with the satellite 200 through a non-terrestrial network (non-terrestrial network, NTN), the terminal device 100 that establishes the communication connection may exchange information with the access network device 300 through a terrestrial network (terrestrial network, TN), the satellite that establishes the communication connection may exchange information with the satellite network device 400 through the non-terrestrial network, and the satellite network device 400 that establishes the communication connection may exchange information with the access network device 300 through the terrestrial network. For example, the terrestrial network may be a cellular network.

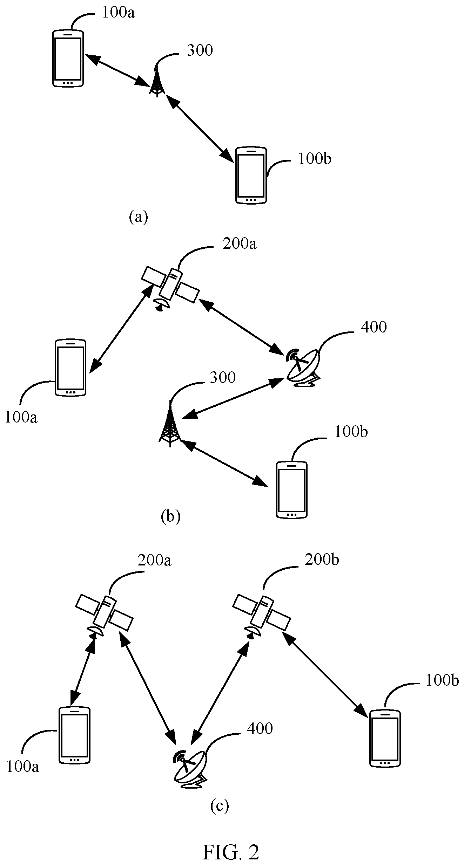

Refer to FIG. 2. An example in which a terminal device 100 includes a terminal device 100a and a terminal device 100b, and a satellite includes a satellite 200a and a satellite 200b is used for description. As shown in (a) in FIG. 2, when the terminal device 100a and the terminal device 100b need to communicate, if both the terminal device 100a and the terminal device 100b are located in a terrestrial cellular network, the terminal device 100a may send information to an access network device 300, and the access network device 300 forwards the information to the terminal device 100b. Correspondingly, the terminal device 100b may also send information to the access network device 300, and the access network device 300 forwards the information to the terminal device 100a. In this way, the communication between the terminal device 100a and the terminal device 100b is implemented.

As shown in (b) in FIG. 2, if the terminal device 100a is not located in a terrestrial cellular network, and the terminal device 100b is located in the terrestrial cellular network, assuming that the terminal device 100a is communicatively connected to the satellite 200a, and the terminal device 100b is communicatively connected to an access network device 300, the terminal device 100a may send information to the satellite 200a, and the satellite 200a may send the information to a satellite network device 400. After receiving the information, the satellite network device 400 sends the information to the access network device 300, to send the information to the terminal device 100b through the access network device 300. Correspondingly, the terminal device 100b may also send information to the access network device 300, and forward the information to a satellite network management device 400 through the access network device 300. The satellite network management device 400 sends the information to the satellite 200a, and the satellite 200a sends the information to the terminal device 100a. In this way, communication between the terminal device 100a and the terminal device 100b is implemented.

As shown in (c) in FIG. 2, if neither the terminal device 100a nor the terminal device 100b is located in a terrestrial cellular network, the terminal device 100a is communicatively connected to the satellite 200a, and the terminal device 100b is communicatively connected to the satellite 200b, the terminal device 100a may send information to the satellite 200a, and the satellite 200a may send the information to a satellite network device 400. After receiving the information, the satellite network device 400 sends the information to the satellite 200b. After receiving the information, the satellite 200b sends the information to the terminal device 100b. Correspondingly, the terminal device 100b also has a same process. Details are not described herein.

In some embodiments, the terminal device 100a and the terminal device 100b may alternatively communicate via a satellite. For example, the terminal device 100a may send information to the satellite 200a that has been communicatively connected, and the satellite 200a may send the information to the satellite 200b that is communicatively connected to the terminal device 100b. After receiving the information, the satellite 200b sends the information to the terminal device 100b.

A communication manner of the satellite communication system is not specifically limited in embodiments of this application, and may be set based on an actual situation.

In embodiments of this application, the satellite may be a low earth orbit satellite, a medium earth orbit satellite, or a high earth orbit satellite.

The access network device 300 may be a device having a wireless transceiver function, or a chip or a chip system that may be disposed in the device. The access network device includes but is not limited to various types of base stations, such as a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a radio relay node, a radio backhaul node, a transmission point (transmission reception point, TRP, or transmission point, or TP), and the like, may be a gNB or a transmission point (TRP or TP) in a 5G system, for example, new radio (new radio, NR), or one antenna panel or one group of antenna panels (including a plurality of antenna panels) of a base station in the 5G system, or may be a network node that forms a gNB or a transmission point, for example, a baseband unit (BBU), a distributed unit (distributed unit, DU), or a road side unit (road side unit, RSU) having a base station function.

The satellite network management device 400 may include a gateway station. The gateway station is configured to connect the satellite and the terrestrial network, and includes a radio frequency subsystem and a baseband subsystem.

The terminal device is a terminal that accesses the satellite communication system and that has a wireless transceiver function, or a chip or a chip system that may be disposed in the terminal. The terminal device may also be referred to as an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a RSU having a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement a satellite alignment method provided in this application.

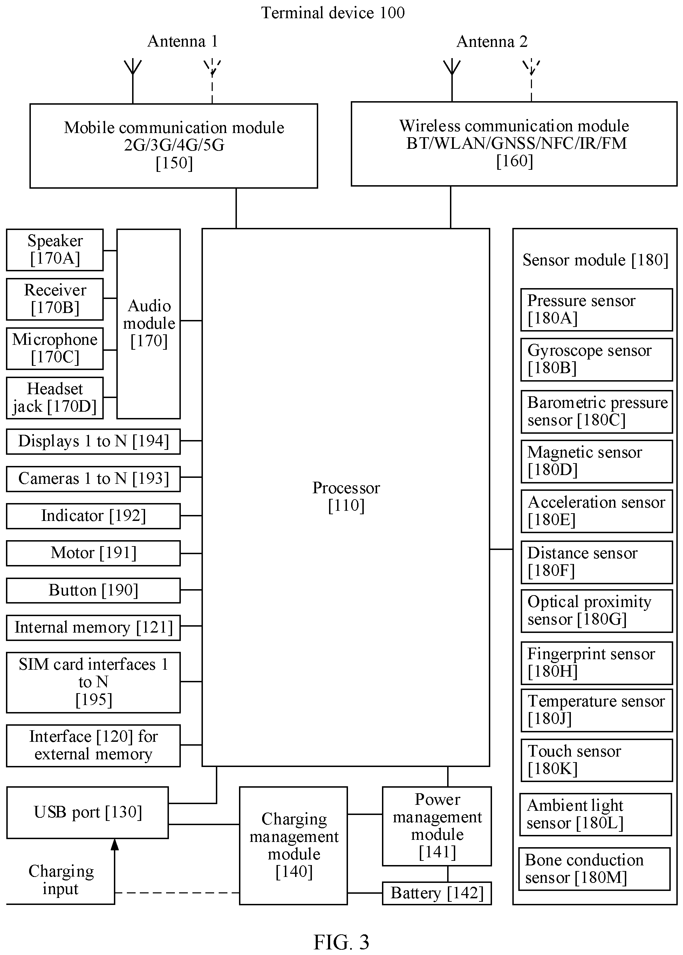

For ease of understanding, a structure of the terminal device provided in embodiments of this application is specifically described by using an example in which the terminal device is the mobile phone. FIG. 3 is a diagram of a structure of a terminal device according to an embodiment of this application. As shown in FIG. 3, the terminal device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, and a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. For functions and working principles of the sensors, refer to common technologies. Details are not described herein.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If needing to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the display 194 through the DSI interface, to implement a display function of the terminal device 100.

It may be understood that an interface connection relationship between the modules shown in this embodiment of this application is merely an example for description, and constitutes no limitation on the structure of the terminal device 100. In some other embodiments of this application, the terminal device 100 may alternatively use an interface connection manner different from that in the foregoing embodiment or use a combination of a plurality of interface connection manners.

The charging management module 140 is configured to receive charging input from the charger. The power management module 141 is configured to connect the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like.

The terminal device 100 implements the display function through the GPU, the display 194, the application processor, and the like. The display 194 is configured to display an image, a video, and the like. In some embodiments, the terminal device 100 may include 1 or N displays 194, where N is a positive integer greater than 1.

The terminal device 100 may implement a photographing function through the ISP, the camera 193, the video codec, the GPU, the display 194, the application processor, and the like.

The interface 120 for external memory may be configured to connect an external memory card, for example, a micro SD card, to extend a storage capability of the terminal device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required for at least one function (for example, a voice playing function or an image playing function), and the like. The data storage area may store data (for example, audio data or an address book) created during using the terminal device 100, and the like. In addition, the internal memory 121 may include a high-velocity random access memory, or may include a non-volatile memory, for example, at least one magnetic disk storage device, a flash storage device, or a universal flash storage (universal flash storage, UFS). The processor 110 runs the instructions stored in the internal memory 121, and/or instructions stored in memory disposed in the processor, to execute various function applications and data processing of the terminal device 100.

The terminal device 100 may implement an audio function like music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or a part of a functional module in the audio module 170 is disposed in the processor 110.

The speaker 170A, also referred to as a "loudspeaker", is configured to convert an audio electrical signal into a sound signal. The headset jack 170D is configured to connect a wired headset.

The SIM card interface 195 is configured to connect a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, the SIM card, and the like. A plurality of cards may be inserted simultaneously into a same SIM card interface 195. The plurality of cards may be of a same type or different types. The SIM card interface 195 may also be compatible with different types of SIM cards. The SIM card interface 195 may also be compatible with the external memory card. The terminal device 100 may interact with an access network device through the SIM card, to implement functions such as calling and data communication. In some embodiments, the terminal device 100 uses an eSIM, namely, an embedded SIM card. The eSIM card may be embedded into the terminal device 100, and cannot be separated from the terminal device 100.

In addition, for descriptions of hardware such as the button 190, the motor 191, and the indicator 192, refer to common technologies. Details are not described in this embodiment of this application.

In this embodiment of this application, a wireless communication function of the terminal device 100 may be implemented through an antenna element, the mobile communication module 150, the wireless communication module 160, the modem processor, the baseband processor, and the like.

The antenna element includes the antenna 1 and the antenna 2. There may be a plurality of antennas 1 and antennas 2, which may be specifically set based on an actual requirement.

In this embodiment of this application, the antenna 1 and the antenna 2 are configured to transmit and receive electromagnetic wave signals. The antenna 1 of the terminal device 100 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

When the antenna 1 is coupled to the mobile communication module 150, the mobile communication module 150 may provide a wireless communication solution that includes 2G/3G/4G/5G and that is applied to the terminal device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transfer the electromagnetic wave to the modem processor for demodulation. The mobile communication module 150 may further amplify the signal modulated by the modem processor, and convert the signal into an electromagnetic wave through the antenna 1 for radiation.

For example, the mobile communication module 150 may receive, through the antenna 1, an electromagnetic wave signal sent by the access network device, perform processing such as filtering and amplification on the received electromagnetic wave, and transfer a processed electromagnetic wave signal to the modem processor for demodulation. Correspondingly, the mobile communication module 150 may amplify the signal modulated by the modem processor, convert the signal into an electromagnetic wave signal through the antenna 1 for radiation, to send the electromagnetic wave signal to the access network device. In this way, the terminal device can exchange information with the access network device.

In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers, to the baseband processor for processing, the low-frequency baseband signal obtained through demodulation. The low-frequency baseband signal is processed by the baseband processor and then transferred to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

When the antenna 2 is coupled to the wireless communication module 160, the wireless communication module 160 may provide a solution that is applied to the terminal device 100 and that includes wireless communication such as the wireless local area network (wireless local area network, WLAN) (for example, a wireless fidelity (wireless fidelity, Wi-Fi) network), the Bluetooth (Bluetooth, BT), the global navigation satellite system (global navigation satellite system, GNSS), the frequency modulation (frequency modulation, FM), the near field communication (near field communication, NFC), and the infrared (infrared, IR) technology. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

For example, the wireless communication module 160 may receive, through the antenna 2, an electromagnetic wave signal sent by a satellite, perform frequency modulation and filtering processing on the electromagnetic wave signal, and send a processed signal to the processor 110. Correspondingly, the wireless communication module 160 may further receive the to-be-sent signal from the processor 110, perform frequency modulation and amplification on the to-be-sent signal, and convert the to-be-sent signal into the electromagnetic wave for radiation through the antenna 2, to send the electromagnetic wave to the satellite. In this way, the terminal device can exchange information with the satellite.

It may be understood that the structure shown in this embodiment of this application constitutes no specific limitation on the terminal device 100. In some other embodiments of this application, the terminal device 100 may include more or fewer components than those shown in the figure, some components may be combined, some components may be divided, or there may be a different component arrangement. The components shown in the figure may be implemented by hardware, software, or a combination of software and hardware.

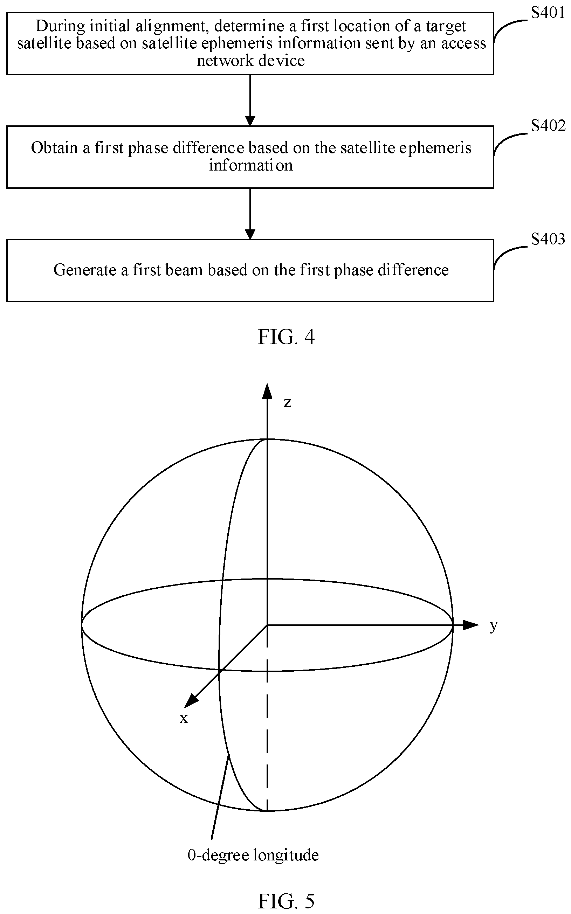

Based on the architectures in FIG. 1, FIG. 2, and FIG. 3, a satellite alignment method provided in embodiments of this application is specifically described. FIG. 4 is a schematic flowchart of a satellite alignment method according to an embodiment of this application. The satellite alignment method provided in this embodiment of this application is applied to the satellite communication system shown in FIG. 1, and is performed by the terminal device in the satellite communication system. As shown in FIG. 4, the satellite alignment method provided in this embodiment of this application includes S401 to S403.

S401: During initial alignment, determine a first location of a target satellite based on satellite ephemeris information sent by an access network device.

The satellite ephemeris information may be used to describe a location and motion information of a satellite in space. Therefore, after the satellite enters space, the motion information and the location of the satellite may be determined based on the satellite ephemeris information.

In this embodiment of this application, the access network device may send the satellite ephemeris information to the terminal device based on first set duration, for example, send the satellite ephemeris information once every 4 h. After receiving the satellite ephemeris information sent by the access network device, the terminal device may store the satellite ephemeris information. When there is a requirement on satellite alignment, latest satellite ephemeris information may be obtained from the stored satellite ephemeris information, and the satellite alignment is performed based on the latest satellite ephemeris information.

In some embodiments, the terminal device may alternatively initiate a request to the access network device based on first set duration, to request to obtain the satellite ephemeris information. After receiving the request, the access network device may send the satellite ephemeris information to the terminal device based on the request. After receiving the satellite ephemeris information, the terminal device may store the satellite ephemeris information. When there is a requirement on satellite alignment, latest satellite ephemeris information may be obtained from the stored satellite ephemeris information, and the satellite alignment is performed based on the latest satellite ephemeris information.

It may be understood that when there is the requirement on the satellite alignment, if the terminal device and the access network device may exchange information, the terminal device may also initiate the request to the access network device, to request to obtain the satellite ephemeris information.

It may be understood that the access network device may send a satellite ephemeris to the terminal device through a terrestrial network.

It should be noted that the access network device may obtain the satellite ephemeris information from a satellite network management device. After the satellite enters a space orbit, the satellite may send, to the satellite network management device in real time or based on second set duration, a data packet including orbit information. After receiving the data packet, the satellite network management device decodes the data packet, to obtain the satellite ephemeris information. After obtaining the satellite ephemeris information, the satellite network management device may send the satellite ephemeris information to the access network device, or may send the satellite ephemeris information to the access network device after receiving request information from the access network device.

The access network device may initiate a request to the satellite network management device based on the first set duration, or may initiate a request to the satellite network management device after receiving the request from the terminal device.

It should be noted that specific duration of the first set duration and the second set duration may be set based on an actual requirement. This is not limited in this embodiment of this application.

It may be understood that in this embodiment of this application, when there are a plurality of satellites in the space orbit, the satellite ephemeris information may include ephemeris information of the plurality of satellites.

Because there are the plurality of satellites in the space orbit, when initial satellite alignment is performed, a satellite that needs to be aligned with, that is, the target satellite, may be first determined from the plurality of satellites, and then alignment with the target satellite is performed.

Considering that the satellite ephemeris information includes the ephemeris information of the plurality of satellites, in this embodiment of this application, locations of the plurality of satellites may be obtained through calculation based on the ephemeris information of the plurality of satellites, and the target satellite and the first location of the target satellite are determined from the plurality of satellites based on the locations of the plurality of satellites.

In this embodiment of this application, a location of a satellite that is to be calculated is a location of the satellite in an earth coordinate system at a first moment.

As shown in FIG. 5, the earth coordinate system is a coordinate system established by using the earth sphere center as an origin, a straight line from the sphere center toward the 0-degree longitude on the equator as an x-coordinate axis, a straight line from the sphere center toward the 90-degree east longitude on the equator as a y-coordinate axis, and a straight line from the sphere center toward the north pole as a z-coordinate axis.

The first moment may be a current moment, to be specific, a moment at which the satellite ephemeris information is obtained. In some embodiments, the first moment may be any future moment at which the satellite needs to be aligned with.

In this embodiment of this application, the obtained satellite ephemeris information may include ephemeris information of each satellite. The ephemeris information of each satellite includes an orbit inclination angle of an orbit of the satellite, an eccentricity of the orbit, a right ascension of the ascending node of the orbit, an argument of periapsis, a mean anomaly, an average motion velocity, a first-order time derivative of the average motion velocity, and a second-order time derivative of the average motion velocity.

In this embodiment of this application, a location of each satellite in the earth coordinate system at the first moment is associated with a semi-major axis of the orbit of the satellite at the first moment, the eccentricity of the orbit, and a true anomaly of the satellite in the orbit at the first moment. The true anomaly of the satellite in the orbit at the first moment is associated with the mean anomaly of the satellite in the orbit at the first moment. The mean anomaly of the satellite in the orbit at the first moment is associated with the average motion velocity of the satellite in the orbit at the first moment. The average motion velocity of the satellite in the orbit at the first moment is associated with the semi-major axis of the orbit of the satellite at the first moment. The average motion velocity of each satellite in the orbit at the first moment may be obtained by correcting an average motion velocity in ephemeris information of the satellite.

Therefore, when the location of each satellite in the earth coordinate system at the first moment is determined, the average motion velocity of the satellite in the orbit at the first moment may be obtained based on the ephemeris information of the satellite, the mean anomaly of the satellite in the orbit at the first moment and the semi-major axis of the orbit at the first moment may be obtained based on the average motion velocity of the satellite in the orbit at the first moment, the true anomaly of the satellite in the orbit at the first moment is obtained based on the mean anomaly of the satellite in the orbit at the first moment, and then the location of the satellite in the earth coordinate system at the first moment is obtained based on the true anomaly of the satellite in the orbit at the first moment, the semi-major axis of the orbit at the first moment, and the eccentricity of the orbit.

In this embodiment of this application, the average motion velocity of each satellite in the orbit at the first moment meets a first relationship. The first relationship may be Formula (1).

$$n(t) = n + n_{dot} * \Delta t + n_{ddot} * \Delta t^2 \qquad \text{Formula (1)}$$

$t$ is the first moment; $n(t)$ is the average motion velocity of the satellite in the orbit at the first moment; $n$ is the average motion velocity in the ephemeris information of the satellite; $n_{dot}$ is a first-order time derivative of the average motion velocity in the ephemeris information; $n_{ddot}$ is a second-order time derivative of the average motion velocity in the ephemeris information; $\Delta t$ is a time difference between the first moment and a reference moment of the ephemeris information, where $\Delta t = t - t0$; and $t0$ is the reference moment of the ephemeris information, where the reference moment of the ephemeris information may be a generation moment of the ephemeris information.

In this embodiment of this application, the semi-major axis of the orbit of each satellite at the first moment and the average motion velocity of the satellite in the orbit at the first moment meet a second relationship. The second relationship may be Formula (2).

$$a(t) = \sqrt[3]{GM_e/n(t)^2} \qquad \text{Formula (2)}$$

$a(t)$ is the semi-major axis of the orbit of the satellite at the first moment, $G$ is a gravitational constant, $M_e$ is the mass of the earth, and $n(t)$ is the average motion velocity of the satellite in the orbit at the first moment.

In this embodiment of this application, the mean anomaly of each satellite in the orbit at the first moment and the average motion velocity of the satellite in the orbit at the first moment meet a third relationship. The third relationship may be Formula (3).

$$M(t) = M + n(t) * \Delta t \qquad\qquad \text{Formula (3)}$$

$M(t)$ is the mean anomaly of the satellite in the orbit at the first moment, M is a mean anomaly in the ephemeris information of the satellite, and $n(t)$ is the average motion velocity of the satellite in the orbit at the first moment.

In this embodiment of this application, the true anomaly of each satellite in the orbit at the first moment and the mean anomaly of the satellite in the orbit at the first moment meet a fourth relationship. The fourth relationship may be Formula (4).

$$\nu(t) = 2 * \arctan\left(\sqrt{(1+e)/(1-e)} * \tan(E(t)/2)\right) \qquad\qquad \text{Formula (4)}$$

$\nu(t)$ is the true anomaly of the satellite in the orbit at the first moment; $E(t)$ is an intermediate parameter, where $E(t) - e * sin(E(t)) = M(t)$; e is an eccentricity in the ephemeris information of the satellite, that is, the eccentricity of the orbit of the satellite; and $M(t)$ is the mean anomaly of the satellite in the orbit at the first moment.

In this embodiment of this application, the location of each satellite in the earth coordinate system at the first moment, the eccentricity of the orbit of the satellite, the semi-major axis of the orbit at the first moment, and the true anomaly of the satellite in the orbit at the first moment meet a fifth relationship. The fifth relationship may be Formula (5).

$$\begin{cases} x^s(t) = a(t) * (1 - e^2) * cos(v(t)) / (1 + e * cos(v(t))) \\ y^s(t) = a(t) * (1 - e^2) * sin(v(t)) / (1 + e * cos(v(t))) \\ z^s(t) = a(t) * (1 - e^2) * sin(i) * \sin(\Omega + \omega) / (1 + e * cos(v(t))) \end{cases} \qquad \text{Formula (5)}$$

$x^s(t)$ is a coordinate of the satellite on the x-coordinate axis in the earth coordinate system; $y^s(t)$ is a coordinate of the satellite on the y-coordinate axis in the earth coordinate system; $z^s(t)$ is a coordinate of the satellite on the z-coordinate axis in the earth coordinate system, where the location of the satellite in the earth coordinate system may be represented as ($x^s(t)$, $y^s(t)$, $z^s(t)$); $\Omega$ is a right ascension of the ascending node in the ephemeris information of the satellite, that is, the right ascension of the ascending node of the orbit of the satellite; $i$ is an orbit inclination angle that is of the orbit and that is in the ephemeris information of the satellite; $\omega$ is an argument of periapsis in the ephemeris information of the satellite, that is, the argument of periapsis of the orbit of the satellite; $\nu(t)$ is the true anomaly of the satellite in the orbit at the first moment; $a(t)$ is the semi-major axis of the orbit of the satellite at the first moment; and e is the eccentricity in the ephemeris information of the satellite, that is, the eccentricity of the orbit of the satellite.

The location of each satellite in the earth coordinate system may be obtained according to Formula (1) to Formula (5). After locations of satellites in the earth coordinate system are obtained, a satellite that is closest to the terminal device may be selected as the target satellite based on the locations of the satellites in the earth coordinate system.

For example, a terminal location of the terminal device in the earth coordinate system may be first determined, and then distances between the terminal device and the satellites are determined based on the terminal location of the terminal device in the earth coordinate system and the locations of the satellites in the earth coordinate system, to obtain the satellite that is closest to the terminal device as the target satellite.

Coordinate conversion may be performed on geographical coordinates of the terminal device, to obtain the terminal location of the terminal device in the earth coordinate system. The geographical coordinates of the terminal device may be obtained via a positioning system.

In this embodiment of this application, the geographical coordinates of the terminal device may be represented as ($\varphi(t)$, $\theta(t)$), where $\varphi(t)$ represents longitude information of the terminal device at the first moment, and $\theta(t)$ represents latitude information of the terminal device at the first moment.

The terminal location of the terminal device in the earth coordinate system and the geographical coordinates of the terminal device may meet a sixth relationship. The sixth relationship may be Formula (6).

$$\begin{cases} x^u(t) = r * sin(\varphi(t)) * cos(\theta(t)) \\ y^u(t) = r * sin(\varphi(t)) * sin(\theta(t)) \\ z^u(t) = r * \cos(\varphi(t)) \end{cases} \qquad \text{Formula (6)}$$

$x^u(t)$ is a coordinate of the terminal device on the x-coordinate axis in the earth coordinate system, $y^u(t)$ is a coordinate of the terminal device on the y-coordinate axis in the earth coordinate system, and $z^u(t)$ is a coordinate of the terminal device on the z-coordinate axis in the earth coordinate system. The terminal location of the terminal device in the earth coordinate system may be represented as ($x^u(t)$, $y^u(t)$, $z^u(t)$), where $r$ is the radius of the earth.

A distance between the terminal device and each satellite meets a seventh relationship. The seventh relationship may be Formula (7).

$$d = \sqrt{(x^s(t) - x^u(t))^2 + (y^s(t) - y^u(t))^2 + (z^s(t) - z^u(t))^2} \qquad \text{Formula (7)}$$

$d$ is the distance between the terminal device and the satellite.

After the distances between the terminal device and the satellites are obtained, the distances between the terminal device and the satellites may be compared, and the satellite that is closest to the terminal device is selected as the target satellite.

It should be noted that determining the target satellite based on the distances is merely an implementation listed in this application, and the implementation is not intended to limit a manner of determining the target satellite in this application. The manner may be specifically set based on an actual requirement.

For example, when the terminal device may obtain signal strength of the satellite, the target satellite may alternatively be a satellite in a plurality of satellites that has a strongest signal and that is received by the terminal device.

For example, when storing a satellite alignment history, the terminal device may further determine the target satellite based on the stored satellite alignment history. In other words, the target satellite may be a satellite in the plurality of satellites that has a historical record of alignment with the terminal device. For example, the plurality of satellites include a satellite a, a satellite b, and a satellite c. Based on the satellite alignment history, it may be learned that the terminal device has a historical record of alignment with the satellite a, and has no historical record of alignment with the satellite b and the satellite c. In this case, the satellite a may serve as the target satellite.

For example, the terminal device may further notify a user of the plurality of satellites in the satellite ephemeris information, so that the user indicates the satellite that needs to be aligned with. After the satellite indicated by the user is received, the satellite indicated by the user serves as the target satellite. For example, the terminal device may display the plurality of satellites on a terminal interface, and the user may select any satellite on the terminal interface. The terminal device responds to a user operation, obtains the satellite indicated by the user, and determines, as the target satellite, the satellite indicated by the user. For another example, the terminal device may broadcast the satellites in the satellite ephemeris information in a voice broadcast manner. The user may select, based on the broadcast, the satellite that needs to be aligned with, and then input, into the terminal device, the satellite that needs to be aligned with. In this case, the terminal device can obtain the satellite indicated by the user, and determine, as the target satellite, the satellite indicated by the user.

It may be understood that a location of the target satellite at the first moment is the first location. For ease of understanding, the first location of the target satellite may be represented as ( $x_n^s(t), y_n^s(t), z_n^s(t)$ ).

In this embodiment of this application, after the target satellite and the first location of the target satellite are obtained, a beam generated by an antenna element of the terminal device may be directed to the first location of the target satellite, to implement alignment between the target satellite and a radiation direction of the antenna element of the terminal device. It may be understood that when the beam generated by the antenna element of the terminal device is directed to the first location of the target satellite, the radiation direction of the antenna element of the terminal device is aligned with the target satellite.

The direction of the beam of the antenna element refers to a beam shape formed through phase difference superimposition on a signal arriving at the antenna elements of the terminal device. Therefore, in this embodiment of this application, a phase difference of the signal arriving at the antenna elements of the terminal device may be adjusted, so that the beam generated by the antenna element of the terminal device is directed to (is aligned with) the first location of the target satellite.

S402: Obtain a first phase difference based on the satellite ephemeris information.

The first phase difference is the phase difference of the signal arriving at the antenna elements of the terminal device at the first moment. The signal may be a signal sent by the terminal device to the target satellite, or may be a signal sent by the target satellite to the terminal device.

In this embodiment of this application, the first phase difference may be obtained based on pose information of the terminal device and the satellite ephemeris information. Specifically, the first phase difference is associated with a beam direction azimuth and a beam direction elevation that are required for a first beam. The beam direction azimuth and the beam direction elevation that are required for the first beam are associated with the pose information of the terminal device and the first location of the target satellite. The first location of the target satellite may be obtained through calculation based on the satellite ephemeris information.

For obtaining the first location of the target satellite based on the satellite ephemeris information, refer to S401. Details are not described herein.

In this embodiment of this application, the first beam is the beam generated by the antenna element of the terminal device at the first moment. The beam direction azimuth is an azimuth that the beam generated by the terminal device at the first moment needs to be directed to. The beam direction elevation is an elevation that the beam generated by the terminal device at the first moment needs to be directed to.

In this embodiment of this application, the pose information of the terminal device includes the terminal location of the terminal device in the earth coordinate system, and an azimuth and an elevation of the terminal device.

The beam direction azimuth required for the first beam is a difference between a relative azimuth of the target satellite relative to the terminal device and the azimuth of the terminal device. The beam direction elevation that are required for the first beam is a difference between a relative elevation of the target satellite relative to the terminal device and the elevation of the terminal device.

An angle conversion relationship exists between the relative elevation and the relative azimuth of the target satellite relative to the terminal device and a relative location of the target satellite relative to the terminal device, and the relative location of the target satellite relative to the terminal device is associated with the terminal location of the terminal device in the earth coordinate system and the first location of the target satellite in the earth coordinate system.

In this embodiment of this application, the relative location of the target satellite relative to the terminal device, the terminal location of the terminal device, and the first location of the target satellite meet an eighth relationship. The eighth relationship may be Formula (8).

$$\begin{cases} (x^u(t), y^u(t), z^u(t)) \rightarrow (0,0,0) \\ x_n^s(t), y_n^s(t), z_n^s(t) \rightarrow (x_n^s(t) - x^u(t), y_n^s(t) - y^u(t), z_n^s(t) - z^u(t)) \end{cases} \quad \text{Formula (8)}$$

When the relative location of the target satellite relative to the terminal device is determined, a terminal coordinate system may be established by using the terminal location of the terminal device as the origin, a straight line from the location of the terminal device toward the 0-degree longitude on the equator as an x-coordinate axis, a straight line from the location of the terminal device toward the 90-degree east longitude on the equator as a y-coordinate axis, and a straight line from the location of the terminal device toward the north pole as a z-coordinate axis. Coordinates of the terminal device and coordinates of the target satellite in the earth coordinate system are converted to those in the terminal coordinate system. After the terminal location of the terminal device is converted to the terminal coordinate system, the terminal location of the terminal device changes from ($x^u(t)$, $y^u(t)$, $z^u(t)$) to (0, 0, 0), and the relative location of the target satellite relative to the terminal device is ( $x_n^s(t) - x^u(t), y_n^s(t) - y^u(t), z_n^s(t) - z^u(t)$ ).

After the relative location of the target location relative to the terminal device is obtained, polar coordinate conversion is performed on the relative location, to obtain the relative elevation and the relative azimuth of the target satellite relative to the terminal device, that is, ( $(x_n^s(t) - x^u(t), y_n^s(t) - y^u(t), z_n^s(t) - z^u(t)) \rightarrow (r_n^s(t), \varphi_n^s(t), \theta_n^s(t)$ ), where $r_n^s(t)$ is a distance from the target satellite to the terminal device, $\varphi_n^s(t)$ is the relative elevation of the target satellite relative to the terminal device, and $\theta_n^s(t)$ is the relative azimuth of the target satellite relative to the terminal device.

In this embodiment of this application, the beam direction azimuth required for the first beam is the difference between the relative azimuth and the azimuth of the terminal device, that is, the beam direction azimuth required for the first beam is $\theta_n^s(t) - a(t)$ , where a(t) is the azimuth of the terminal device. The azimuth of the terminal device may be obtained from geomagnetic data of the terminal device.

In this embodiment of this application, the beam direction elevation that are required for the first beam is the difference between the relative elevation and the elevation of the terminal device, that is, the beam direction elevation that are required for the first beam is $\varphi_n^s(t) - b(t)$ , where b(t) is the elevation of the terminal device. The elevation of the terminal device may be obtained from pose data of the terminal device.

After the beam direction elevation and the beam direction azimuth required for the first beam are obtained, the first phase difference may be determined based on the beam direction elevation and the beam direction azimuth required for the first beam.

Considering that antenna elements configured on the terminal device have a plurality of structures, when the structures of the antenna elements configured on the terminal device are different, first phase differences determined based on the required beam direction elevation and the required beam direction azimuth are also different. Therefore, in this embodiment of this application, the first phase difference may be determined based on the structure of the antenna element configured on the terminal device, the required beam direction elevation, and the required beam direction azimuth.

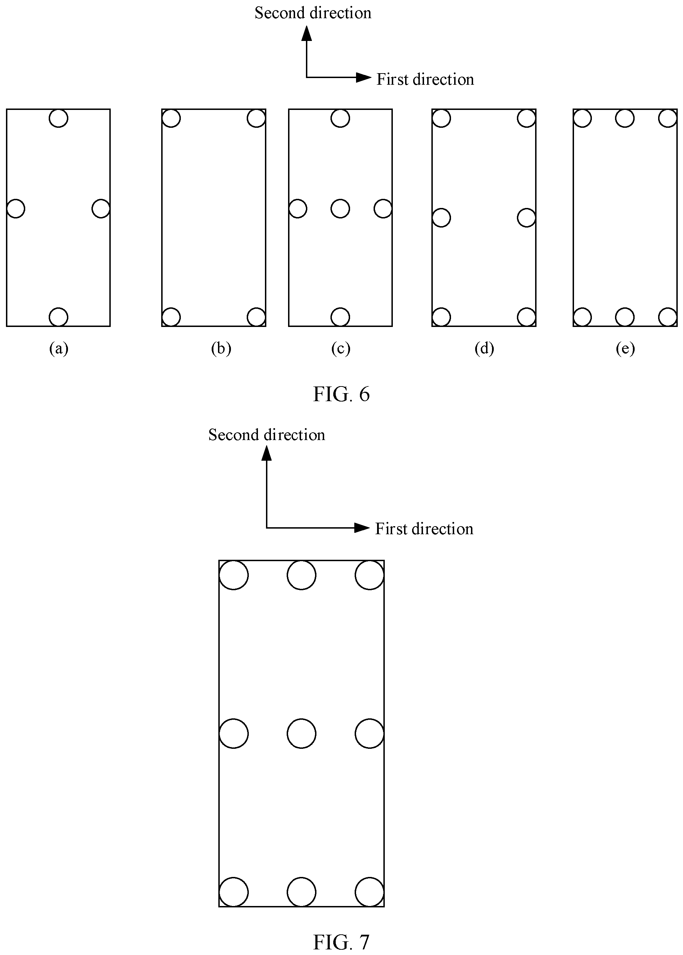

In this embodiment of this application, the antenna elements configured on the terminal device may have two structures. In one structure, at least four antenna elements are configured for the terminal device, and the at least four antenna elements are symmetrically disposed in a first direction and a second direction. The first direction and the second direction are perpendicular to each other. For example, when there are four antenna elements, the antenna elements may be arranged as (a) and (b) in FIG. 6. In this way, the four antenna elements can be symmetrically disposed in the first direction and the second direction. When there are five antenna elements, the antenna elements may be arranged as (c) in FIG. 6. In this way, the five antenna elements can be symmetrically disposed in the first direction and the second direction. When there are six antenna elements, the antenna elements may be arranged as (d) and (e) in FIG. 6. In this way, the six antenna elements can be symmetrically disposed in the first direction and the second direction.

It may be understood that FIG. 6 is merely examples of the structures of the antenna elements in this embodiment of this application, and constitutes no limitation on the structures of the antenna elements. The structure may be specifically set based on an actual situation, provided that the antenna elements are symmetrically disposed in the first direction and the second direction. For example, when there are nine antenna elements, the antenna elements may be arranged as FIG. 7. In this way, the nine antenna elements can be symmetrically disposed in the first direction and the second direction.

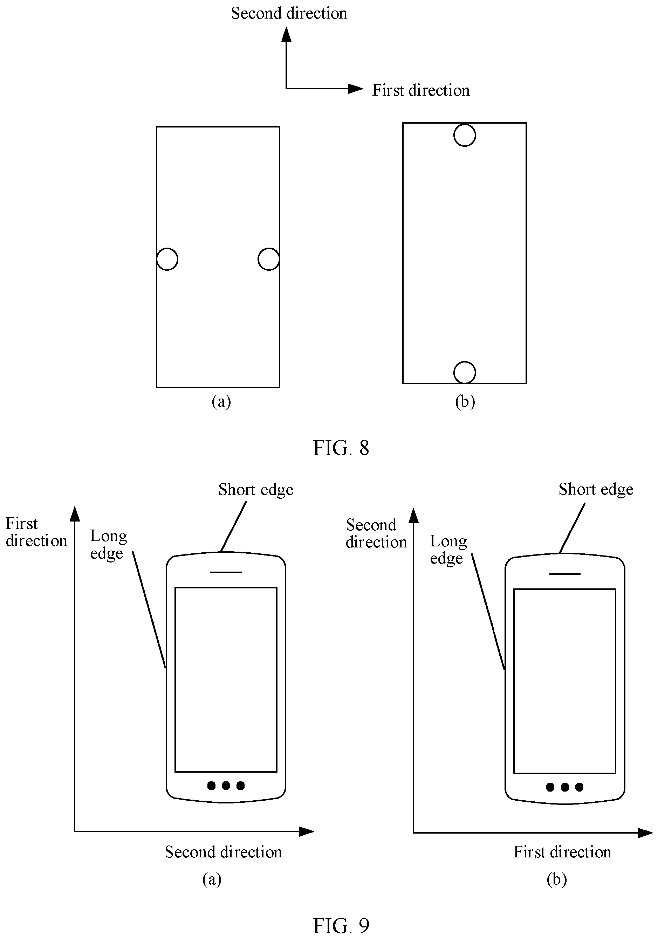

In this embodiment of this application, in the other structure, at least two antenna elements are configured for the terminal device, and the at least two antenna elements are located in a same straight line. For example, as shown in (a) in FIG. 8, the at least two antenna elements may be disposed along a straight line in the first direction, and as shown in (b) in FIG. 8, the at least two antenna elements may alternatively be disposed along a straight line in the second direction. The first direction and the second direction are perpendicular to each other.

In this embodiment of this application, the first direction and the second direction may be set based on an actual situation, and are not specifically limited. For example, as shown in (a) in FIG. 9, the first direction may be a direction of a long edge of the terminal device, and the second direction may be a direction of a short edge of the terminal device. For another example, as shown in (b) in FIG. 9, the first direction may be a direction of a short edge of the terminal device, and the second direction may be a direction of a long edge of the terminal device.

In this embodiment of this application, for the 1st structure, that is, the structure in which the at least four antenna elements are configured for the terminal device, and the at least four antenna elements are symmetrically disposed in the first direction and the second direction, an azimuth and an elevation of a beam generated by the antenna element may be adjusted by adjusting a phase difference of a signal arriving at the antenna elements in the first direction and a phase difference of a signal arriving at the antenna elements in the second direction, so that the beam generated by the antenna element is directed to the first location of the target satellite.

In this embodiment of this application, for ease of understanding, the phase difference of the signal arriving at the antenna elements in the first direction may be represented by using a first phase offset, and the phase difference of the signal arriving at the antenna elements in the second direction may be represented by using a second phase offset. In other words, in this embodiment of this application, the first phase difference may include the first phase offset and a second phase offset.

The first phase offset of the signal arriving at the antenna elements in the first direction is associated with a spacing between any two adjacent antenna elements in the first direction, the beam direction azimuth, and a wavelength of the signal. The second phase offset of the signal arriving at the antenna elements in the second direction is associated with a spacing between any two adjacent antenna elements in the second direction, the beam direction elevation, and a wavelength of the signal.

In this embodiment of this application, the first phase offset of the signal arriving at the antenna elements in the first direction, the spacing between the any two adjacent antenna elements in the first direction, the beam direction azimuth, and the wavelength of the signal meet a ninth relationship. The ninth relationship may be Formula (9).

$$\Delta\emptyset1 = 2\pi d1\, sin\big(\theta_n^s(t) - a(t)\big)/\lambda \qquad \text{Formula (9)}$$

$\Delta\emptyset1$ is the first phase offset, d1 is the spacing between the any two adjacent antenna elements in the first direction, $\theta_n^s(t) - a(t)$ is the beam direction azimuth, and $\lambda$ is the wavelength of the signal. It should be noted that, in this embodiment of this application, two adjacent antenna elements in the first direction are at an equal spacing.

In this embodiment of this application, the second phase offset of the signal arriving at the antenna elements in the second direction, the spacing between the any two adjacent antenna elements in the second direction, the beam direction elevation, and the wavelength of the signal meet a tenth relationship. The tenth relationship may be Formula (10).

$$\Delta\emptyset2 = 2\pi d2\, sin(\varphi_n^s(t) - b(t))/\lambda \qquad \text{Formula (10)}$$

ΔØ2 is the second phase offset, d2 is the spacing between the any two adjacent antenna elements in the second direction, $\varphi_n^s(t) - b(t)$ is the beam direction elevation, and $\lambda$ is the wavelength of the signal. It should be noted that, in this embodiment of this application two adjacent antenna elements in the second direction are at an equal spacing.

In this embodiment of this application, for the 2nd structure, that is, the structure in which the at least two antenna elements are configured for the terminal device, and the at least two antenna elements are located in the same straight line, an azimuth or an inclination angle of a beam generated by the antenna element may be adjusted by adjusting a phase difference of a signal arriving at the antenna elements.

The phase difference of the signal arriving at the antenna elements is the first phase difference, and the first phase difference is associated with the spacing between any two adjacent antenna elements, a first angle, and a wavelength of the signal.

In this embodiment of this application, the association between the first phase difference, the spacing between the any two adjacent antenna elements, the first angle, and the wavelength of the signal meets an eleventh relationship. The eleventh relationship may be Formula (11).

$$\Delta\emptyset = 2\pi d \, sin(\psi) \, / \lambda \qquad\qquad \text{Formula (11)}$$

ΔØ is the first phase difference, d is the spacing between the any two adjacent antenna elements, $\psi$ is the first angle, and $\lambda$ is the wavelength of the signal. It should be noted that, in this embodiment of this application, when the at least two antenna elements are located in the same straight line, two adjacent antenna elements are at an equal spacing.

In this embodiment of this application, when the terminal device is perpendicular to the ground, the first angle is the beam direction elevation. When the terminal device is parallel to the ground, the first angle is the beam direction azimuth.

S403: Generate the first beam based on the first phase difference.

After the first phase difference is obtained, the first phase difference may be applied to the antenna elements, so that the phase difference of the signal arriving at the antenna elements changes to the first phase difference. In this way, the first beam generated by the antenna element can be directed to the first location of the target satellite.

For example, for the 1st structure, after the first phase offset and the second phase offset are obtained, the phase difference of the signal arriving at the antenna elements in the first direction is adjusted to the first phase offset, so that an azimuth of the first beam generated by the antenna element is the required beam direction azimuth. The phase difference of the signal arriving at the antenna elements in the second direction is adjusted to the second phase offset, so that an elevation of the first beam generated by the antenna element is the required beam direction elevation. When the azimuth of the first beam generated by the antenna element is the required beam direction azimuth, and the elevation is the required beam direction elevation, the first beam is directed to the first location of the target satellite.

For example, for the 2nd structure, when the first angle is the beam direction azimuth, after the first phase difference is obtained, the phase difference of the signal arriving at the antenna elements is adjusted to the first phase difference, so that an azimuth of the first beam generated by the antenna element is the required beam direction azimuth. When the first angle is the beam direction elevation, after the first phase difference is obtained, the phase difference of the signal arriving at the antenna elements is adjusted to the first phase difference, so that an elevation of the first beam generated by the antenna element is the required beam direction elevation.

In this embodiment of this application, for the structure in which the at least four antenna elements are configured and the at least four antenna elements are symmetrically disposed in the first direction and the second direction, the phase difference of the signal arriving at the antenna elements in the first direction and the phase difference of the signal arriving at the antenna elements in the second direction are adjusted based on the required beam direction azimuth and the required beam direction elevation, so that the first beam generated by the antenna element can be aligned with the first location of the target satellite. In this way, the radiation direction of the antenna element of the terminal device is automatically aligned with a satellite, causing high alignment accuracy and high alignment efficiency.

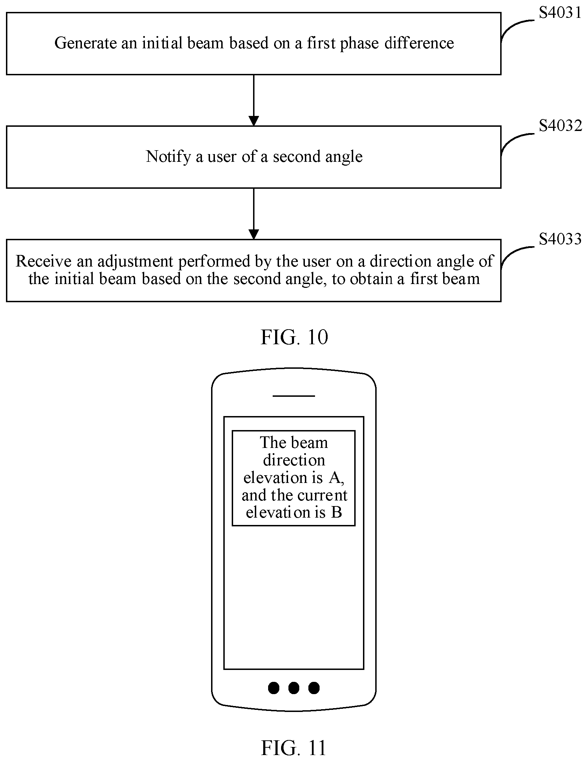

For the 2nd structure, that is, the structure in which the antenna elements are located in the same straight line, only the azimuth or the elevation can be adjusted. To improve satellite alignment accuracy, and enable the first beam generated by the antenna element to be directed to the first location of the target satellite, in this embodiment of this application, the direction of the first beam generated by the antenna element may be further corrected manually by a user. Based on this, refer to FIG. 10. In this embodiment of this application, the step of generating the first beam based on the first phase difference may further include S4031 to S4033.

S4031: Generate an initial beam based on the first phase difference.

The initial beam is a beam generated by the antenna element after the first phase difference is obtained and the phase difference of the signal arriving at the antenna elements is adjusted to the first phase difference. It may be understood that the initial beam is aligned with the target satellite only in an azimuth or an elevation.

S4032: Notify the user of a second angle.

In this embodiment of this application, when the first angle is the beam direction azimuth, the second angle is the beam direction elevation. When the first angle is the beam direction elevation, the second angle is the beam direction azimuth.

In this embodiment of this application, a terminal device may provide a display interface for the user, and display prompt information on the display interface, to notify the user of the second angle, where the prompt information includes the second angle. An example in which when the first angle is the beam direction azimuth, the second angle is the beam direction elevation is used for description. As shown in FIG. 11, prompt information indicating that "The beam direction elevation is A, and the current elevation is B" may be displayed on the display interface. In this way, when viewing the prompt information displayed on the terminal device, the user can adjust the beam elevation based on the prompt information.

In this embodiment of this application, the terminal device may alternatively play the prompt information to the user through voice broadcast, to notify the user of the second angle. An example in which when the first angle is the beam direction azimuth, the second angle is the beam direction elevation is used for description. The terminal device may play, to the user, the prompt information indicating that "The beam direction elevation is A, and the current elevation is B". In this way, after receiving the prompt information played on the terminal device, the user can adjust the beam elevation based on the prompt information.

S4033: Receive an adjustment performed by the user on a direction angle of the initial beam based on the second angle, to obtain the first beam.

When the second angle is the beam direction elevation, adjusting the direction angle of the initial beam is adjusting an elevation of the initial beam. When the second angle is the beam direction azimuth, adjusting the direction angle of the initial beam is adjusting an azimuth of the initial beam.

In this embodiment of this application, after the user is notified of the second angle, the user may adjust the direction angle of the initial beam based on the second angle. The terminal device may obtain the first beam in response to an adjustment operation of the user.

It may be understood that, because the beam is generated by an antenna element of the terminal device, the direction angle of the beam may be adjusted by adjusting an angle (an azimuth or an elevation) of the terminal device. An example in which the first angle is the beam direction azimuth, and the second angle is the beam direction elevation is used for description. After the terminal device notifies the user of the second angle, the user may adjust the elevation of the terminal device to the second angle. After the elevation of the terminal device is adjusted to the second angle, the elevation of the initial beam generated by the antenna element of the terminal device is also the second angle.

In this embodiment of this application, after the user adjusts the angle of the terminal device, the terminal device obtains an adjusted elevation of the initial beam in response to the adjustment operation of the user, and obtains the first beam when the adjusted elevation of the initial beam is the second angle.

To facilitate user adjustment, in this embodiment of this application, an adjustment result of the user may be further displayed. An example in which the first angle is the beam direction azimuth, and the second angle is the beam direction elevation is used for description. When the user adjusts the elevation of the terminal device, the terminal device may prompt the user with the adjustment result, that is, prompt the user with the adjusted elevation of the terminal device. In this way, the user can quickly adjust the elevation of the terminal device to the second angle based on the prompted adjustment result.

Considering that there is a technical level limitation when the user adjusts the direction angle of the initial beam, to facilitate a user operation, and improve user experience, in some embodiments, the terminal device may also detect the angle (the azimuth or the elevation) of the terminal device, and when a difference between the angle of the terminal device and the second angle is within a preset range, send, to the user, indication information indicating that the adjustment ends.

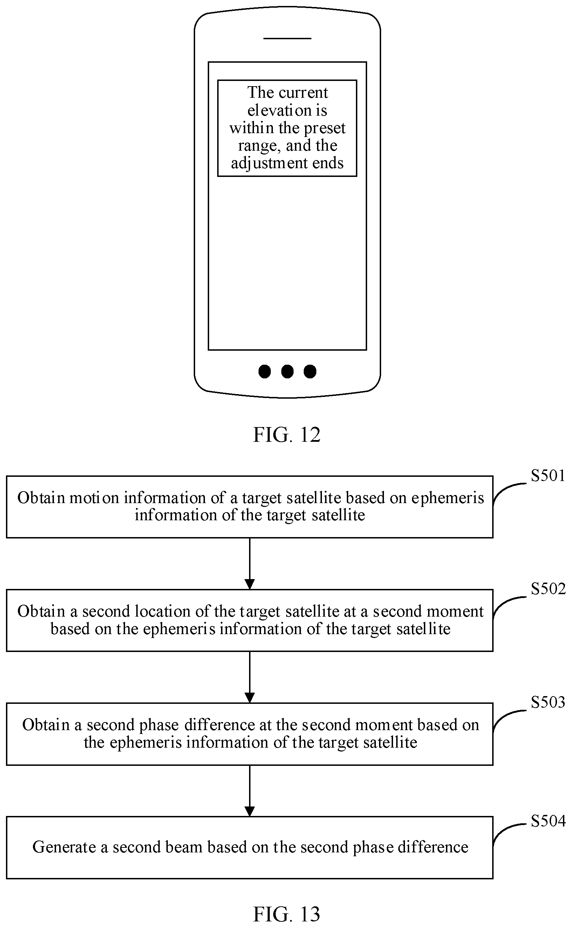

An example in which the first angle is the beam direction azimuth, and the second angle is the beam direction elevation is used for description. When the user adjusts the elevation of the terminal device, the terminal device may monitor the elevation, and when detecting that the difference between the elevation of the terminal device and the second angle is within the preset range, send, to the user, prompt information indicating that the adjustment ends. For example, as shown in FIG. 12, when it is detected that the difference between the elevation of the terminal device and the second angle is within the preset range, prompt information indicating that "The current elevation is within the preset range, and the adjustment ends" may be displayed on the display interface. It may be understood that the preset range may be set based on an actual requirement. This is not specifically limited in this embodiment of this application.

In this embodiment of this application, for the structure in which the at least two antenna elements are configured, and the at least two antenna elements are located in the same straight line, an automatic adjustment of the direction angle of the beam is implemented by adjusting the phase difference of the signal arriving at the antenna elements, and the direction angle of the beam is corrected by prompting the user and with reference to the user operation, thereby improving alignment efficiency while ensuring alignment accuracy.

It may be understood that after the first beam is directed to the target satellite, that is, after the radiation direction of the antenna element of the terminal device is aligned with the target satellite, the terminal device may establish a communication connection to the target satellite, to send information to the target satellite, so as to implement satellite communication.

Considering that when the target satellite is a low earth orbit satellite, the target satellite moves at a high velocity, to ensure satellite communication quality, in this embodiment of this application, continuous alignment may be performed as the target satellite moves, so that the beam generated by the antenna element of the terminal device can be always aligned with the target satellite during communication.

In this embodiment of this application, a moving trajectory of the target satellite in a future time period may be obtained based on the motion information of the target satellite at the first moment, and the target satellite is continuously aligned with based on the moving trajectory of the target satellite in the future time period.

With reference to FIG. 13, a process of continuously aligning a target satellite in an embodiment of this application may be obtained through step S501 to step S504.

S501: Obtain motion information of the target satellite based on ephemeris information of the target satellite.

The motion information of the target satellite represents a motion velocity of the target satellite in an earth coordinate system.

In this embodiment of this application, the motion velocity of the target satellite in the earth coordinate system at a first moment is associated with a semi-major axis of an orbit of the target satellite at the first moment, an eccentricity of the orbit, an orbit inclination angle of the orbit, a right ascension of the ascending node of the orbit of the target satellite at the first moment, an argument of periapsis, and a true anomaly of the target satellite in the orbit at the first moment.

For example, the motion velocity of the target satellite in the earth coordinate system at the first moment, the semi-major axis of the orbit of the target satellite at the first moment, the eccentricity of the orbit, the orbit inclination angle of the orbit, the right ascension of the ascending node of the orbit of the target satellite at the first moment, the argument of periapsis, and the true anomaly of the target satellite in the orbit at the first moment meet a twelfth relationship. The twelfth relationship may be Formula (12).

$$\begin{cases} Vx^s(t) = \sqrt{GMea(t)}(1 + e * \cos(v(t)))(-\sin(v(t)))/a(t) * (1 - e^2) \\ Vy^s(t) = \sqrt{GMea(t)}(1 + e * \cos(v(t)))(\cos(v(t)))/a(t) * (1 - e^2) \\ Vz^s(t) = a(t) * (1 - e^2) * v(t) * \cos(i) * \sin(\Omega + \omega)/(1 + e * \cos(v(t))) \end{cases} \quad \text{Formula (12)}$$

$Vx^s(t)$ is a velocity component of the target satellite on an x-axis in the earth coordinate system; $Vy^s(t)$ is a velocity component of the target satellite on a y-axis in the earth coordinate system; $Vz^s(t)$ is a velocity component of the target satellite on a z-axis in the earth coordinate system, where the motion velocity of the target satellite in the earth coordinate system at the first moment may be represented as $(Vx^s(t), Vy^s(t), Vz^s(t))$; $\Omega$ is a right ascension of the ascending node in the ephemeris information of the target satellite, that is, the right ascension of the ascending node of the orbit of the satellite; $i$ is the orbit inclination angle that is of the orbit and that is in the ephemeris information of the target satellite; $\omega$ is the argument of periapsis in the ephemeris information of the target satellite, that is, an argument of periapsis of the satellite in the orbit; $v(t)$ is the true anomaly of the target satellite in the orbit at the first moment; $a(t)$ is the semi-major axis of the orbit of the target satellite at the first moment; and $e$ is an eccentricity in the ephemeris information of the satellite, that is, the eccentricity of the orbit of the satellite.

It may be understood that, for the true anomaly of the target satellite in the orbit at the first moment and the semi-major axis of the orbit of the target satellite at the first moment, refer to the descriptions of Formula (1) to Formula (4). Details are not described herein.

S502: Obtain a second location of the target satellite at a second moment based on the ephemeris information of the target satellite.

The second moment is any moment after the first moment, and a location of the target location at the first moment is a first location.

In this embodiment of this application, the second location at the second moment may indicate a location of the target satellite in the earth coordinate system at any future moment.

In this embodiment of this application, the second location of the target satellite at the second moment is associated with the motion information of the target satellite. Therefore, the motion information of the target satellite may be obtained based on the ephemeris information of the target satellite, and then the second location of the target satellite at the second moment is obtained based on the motion information of the target satellite.

In this embodiment of this application, the second location of the target satellite at the second moment and the motion information of the target satellite meet a thirteenth relationship. The thirteenth relationship may be Formula (13).

$$\begin{cases} x_n^s(t+T) = x_n^s(t) + Vx^s(t) * T \\ y_n^s(t+T) = y_n^s(t) + Vy^s(t) * T \\ z_n^s(t+T) = z_n^s(t) + Vy^s(t) * T \end{cases} \qquad \text{Formula (13)}$$

$t$ is the first moment, $t + T$ is the second moment, T is a time difference between the first moment and the second moment, $x_n^s(t+T)$ is a coordinate of the target satellite on the x-coordinate axis in the earth coordinate system at the second moment, $y_n^s(t+T)$ is a coordinate of the target satellite on the y-coordinate axis in the earth coordinate system at the second moment, $z_n^s(t+T)$ is a coordinate of the target satellite on the z-coordinate axis in the earth coordinate system at the second moment, $x_n^s(t)$ is a coordinate of the target satellite on the x-coordinate axis in the earth coordinate system at the first moment, $y_n^s(t)$ is a coordinate of the target satellite on the y-coordinate axis in the earth coordinate system at the first moment, and $z_n^s(t)$ is a coordinate of the target satellite on the z-coordinate axis in the earth coordinate system at the first moment.

S503: Obtain a second phase difference at the second moment based on the ephemeris information of the target satellite.

The second phase difference at the second moment is associated with a beam direction azimuth and a beam direction elevation that are required for a second beam generated at the second moment, and the beam direction azimuth and the beam direction elevation that are required for the second beam generated at the second moment are associated with pose information of a terminal device at the second moment and the second location of the target satellite at the second moment.

Therefore, in this embodiment of this application, the motion information of the target satellite may be obtained based on the ephemeris information of the target satellite, and then the second location of the target satellite at the second moment is obtained based on the motion information of the target satellite. Subsequently, the beam direction azimuth and the beam direction elevation that are required for the second beam are obtained based on the pose information of the terminal device at the second moment and the second location of the target satellite at the second moment, and the second phase difference at the second moment is obtained based on the beam direction azimuth and the beam direction elevation that are required for the second beam. For a specific process, refer to step S402, that is, the process of obtaining the first phase difference based on the satellite ephemeris information. Details are not described herein.

S504: Generate the second beam based on the second phase difference.

The second beam is directed to the second location of the target satellite at the second moment.

After the second phase difference is obtained, the second phase difference may be applied to antenna elements, so that a phase difference of a signal arriving at the antenna elements changes to the second phase difference. In this way, the second beam generated by the antenna element at the second moment is directed to the second location of the target satellite. For details, refer to step S403. Details are not described herein.

In this embodiment of this application, locations of the target satellite at different moments may be obtained based on the ephemeris information of the target satellite, and phase differences that need to be adjusted when the signal arrives at the antenna elements at different moments are obtained based on the locations of the target satellite at the different moments. Therefore, a beam of the antenna element is adjusted based on the phase differences that need to be adjusted when the signal arrives at the antenna elements at the different moments, so that the beam generated by the antenna element can be always directed to the target satellite, to implement automatic satellite alignment and tracking of the target satellite, improve alignment efficiency, and improve user experience while ensuring communication quality.

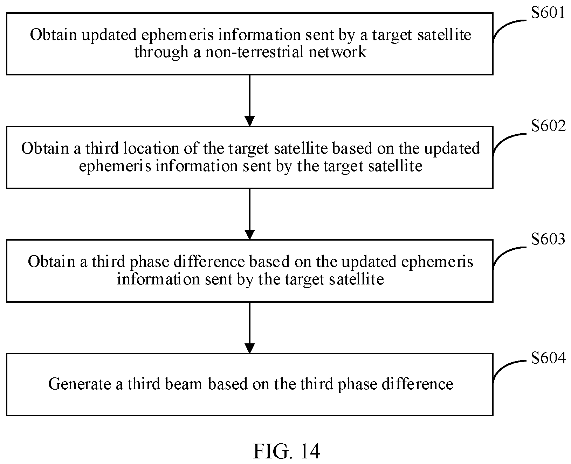

To improve satellite alignment accuracy and further ensure the communication quality, in this embodiment of this application, during tracking of the target satellite, the location of the target satellite may be updated regularly, to reduce an alignment error caused by a location error of the target satellite. With reference to FIG. 14, a satellite alignment method provided in an embodiment of this application may further include the following steps.

S601: Obtain updated ephemeris information sent by a target satellite through a non-terrestrial network.

After the target satellite establishes a communication connection to a terminal device, the target satellite may directly exchange information with the terminal device. Therefore, the terminal device may directly receive ephemeris information sent by the satellite.

In this embodiment of this application, after the target satellite establishes the communication connection to the terminal device, in a process in which the terminal device tracks the target satellite, the terminal device may send an ephemeris information request to the target satellite based on a specified time step, to request to obtain updated ephemeris information. After receiving the ephemeris information request sent by the terminal device, the target satellite sends the updated ephemeris information to the terminal device through a non-terrestrial network in response to the ephemeris information request. In this way, the terminal device can obtain the updated ephemeris information of the target satellite.

In this embodiment of this application, the target satellite may alternatively send indication information to the terminal device based on a specified time step, and the indication information includes the updated ephemeris information of the target satellite. The target satellite may send prompt information to the terminal device in a broadcast manner, or may send prompt information to the terminal device by using a dedicated instruction. For example, the dedicated instruction may be a radio resource control (radio resource control, RRC) instruction, or may be a MAC control element (MAC control element, MAC CE) instruction. This is not specifically limited, and may be set based on an actual requirement.

S602: Obtain a third location of the target satellite based on the updated ephemeris information sent by the target satellite.

After the updated ephemeris information of the target satellite is received, a location of the target satellite, that is, the third location of the target satellite, may be re-determined based on the updated ephemeris information.

In this embodiment of this application, the third location of the target satellite is a latest location determined and obtained based on the updated ephemeris information in a process in which the terminal device tracks and communicates with the target satellite.

It may be understood that, for obtaining the third location of the target satellite based on the updated ephemeris information sent by the target satellite, refer to step S401. Details are not described herein.

S603: Obtain a third phase difference based on the updated ephemeris information sent by the target satellite.

Correspondingly, in this embodiment of this application, the third location of the target satellite may be obtained based on the updated ephemeris information, then a beam direction azimuth and a beam direction elevation that are required for a third beam are obtained based on pose information of the terminal device at a current moment and the third location of the target satellite, and the third phase difference is obtained based on the beam direction azimuth and the beam direction elevation that are required for the third beam. For a specific process, refer to step S402. Details are not described herein.

It may be understood that the third beam is a beam regenerated based on the updated ephemeris information.

S604: Generate the third beam based on the third phase difference.

The third beam is directed to the third location.

After the third phase difference is obtained, the third phase difference may be applied to antenna elements, so that a phase difference of a signal arriving at the antenna elements changes to the third phase difference. In this way, the third beam generated by the antenna element after the updated ephemeris information is received is directed to the third location of the target satellite. For details, refer to step S403. Details are not described herein.

In this embodiment of this application, after the communication connection to the target satellite is established, during tracking of the target satellite, the updated ephemeris information sent by the target satellite is obtained for correcting the location of the target satellite and the generated beam, so that in a process in which the terminal device communicates with the satellite, the generated beam can be always directed to the target satellite, to improve satellite alignment accuracy, ensure communication quality, and improve user experience.

Based on a same concept, an embodiment of this application provides an electronic device. The electronic device may be the terminal device in the foregoing embodiments. The electronic device may specifically include a communication interface, a memory, a processor, and one or more computer programs. The communication interface, the memory, and the processor may be connected through one or more communication buses. The one or more computer programs are stored in the memory and are configured to be executed by the processor. When the one or more computer programs are executed by the processor, functions or steps in the foregoing satellite alignment method are implemented.

An embodiment of this application further provides a computer-readable storage medium. The computer-readable storage medium stores computer program instructions. When the computer program instructions are executed by a processing circuit, functions or steps in the foregoing satellite alignment method are implemented.

In addition, an embodiment of this application may further provide a chip system. The chip system includes a processing circuit and a storage medium. The storage medium stores computer program instructions. When the computer program instructions are executed by the processing circuit, functions or steps in the foregoing satellite alignment method are implemented.

Based on descriptions of the foregoing implementations, a person skilled in the art may clearly understand that, for convenient and brief description, for a specific operating process of the foregoing chip system, electronic device, and computer-readable storage medium, refer to a corresponding process in the foregoing method embodiments. Details are not described herein again.

It may be understood that methods or algorithm steps described with reference to embodiments of this application may be implemented by hardware, or may be implemented by a processor by executing software instructions. The software instructions may include a corresponding software module. The software module may be stored in a random access memory, a flash memory, an erasable programmable read-only memory, an electrically erasable programmable read-only memory, a register, a hard disk drive, a removable hard disk drive, a compact disc read-only memory, or a storage medium in any other form. In an example, the storage medium is coupled to the processor, so that the processor can read information from the storage medium and write information to the storage medium. Certainly, the storage medium may be a component of the processor. The processor and the storage medium may be located in an application-specific integrated circuit (Application-Specific Integrated Circuit, ASIC). In addition, the ASIC may be located in an electronic device. Certainly, the processor and the storage medium may alternatively exist in the electronic device as discrete components.

In an optional manner, when the software is used for implementation, all or a part of the implementations may be implemented in a form of a computer program product. The computer program product includes one or more computer instructions. When the computer program instructions are loaded and executed on a computer, procedures or functions according to embodiments of this application are completely or partially implemented. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, or microwave). The computer-readable storage medium may be any usable medium that can be accessed by the computer, or a data storage device, for example, a server or a data center, integrating one or more usable media. The usable medium may be a magnetic medium (for example, a floppy disk, a hard disk drive, or a magnetic tape), an optical medium (for example, a digital video disk (digital video disk, DVD)), a semiconductor medium (for example, a solid-state drive (solid-state drive, SSD)), or the like.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

**Claims**

1. A satellite alignment method, applied to a terminal device, wherein the method comprises:

   obtaining satellite ephemeris information;
   obtaining a first location of a target satellite based on the satellite ephemeris information;
   obtaining a first phase difference based on the satellite ephemeris information; and
   generating a first beam based on the first phase difference, wherein the first beam is directed to the first location.

2. The satellite alignment method according to claim 1, wherein the obtaining the first phase difference based on the satellite ephemeris information comprises:

   obtaining the first phase difference based on pose information of the terminal device and the satellite ephemeris information, wherein
   the first phase difference is associated with a beam direction azimuth and a beam direction elevation that are required for the first beam; and
   the beam direction azimuth and the beam direction elevation that are required for the first beam are associated with the pose information of the terminal device and the first location.

3. The satellite alignment method according to claim 2, wherein at least four antenna elements are configured for the terminal device, the at least four antenna elements are symmetrically disposed in a first direction and a second direction, and the first direction and the second direction are perpendicular to each other; and
   that the first phase difference is associated with the beam direction azimuth and the beam direction elevation that are required for the first beam comprises:

   a first phase offset of a signal arriving at antenna elements in the first direction is associated with a spacing between any two adjacent antenna elements in the first direction, the beam direction azimuth, and a wavelength of the signal; and
   a second phase offset of the signal arriving at antenna elements in the second direction is associated with a spacing between any two adjacent antenna elements in the second direction, the beam direction elevation, and the wavelength of the signal, wherein
the first phase difference comprises the first phase offset and the second phase offset.

4. The satellite alignment method according to claim 2, wherein at least two antenna elements are configured for the terminal device, the at least two antenna elements are located in a same straight line, and the first phase difference is a phase difference of a signal arriving at the antenna elements; and
that the first phase difference is associated with the beam direction azimuth and the beam direction elevation that are required for the first beam comprises:
the first phase difference is associated with a spacing between any two adjacent antenna elements, a first angle, and a wavelength of the signal, wherein the first angle is the beam direction azimuth or the beam direction elevation.

5. The satellite alignment method according to claim 4, wherein the generating the first beam based on the first phase difference comprises:

generating an initial beam based on the first phase difference;
notifying a user of a second angle, wherein when the first angle is the beam direction azimuth, the second angle is the beam direction elevation; or when the first angle is the beam direction elevation, the second angle is the beam direction azimuth; and
receiving an adjustment performed by the user on a direction angle of the initial beam based on the second angle, to obtain the first beam.

6. The satellite alignment method according to any one of claims 2 to 5, wherein the pose information of the terminal device comprises a terminal location, an azimuth, and an elevation of the terminal device; and
that the beam direction azimuth and the beam direction elevation that are required for the first beam are associated with the pose information of the terminal device and the first location comprises:

a relative location of the target satellite relative to the terminal device is associated with the terminal location of the terminal device and the first location of the target satellite; and
an angle conversion relationship exists between a relative azimuth and a relative elevation of the target satellite relative to the terminal device and the relative location, wherein
the beam direction azimuth is a difference between the relative azimuth and the azimuth of the terminal device, and the beam direction elevation is a difference between the relative elevation and the elevation of the terminal device.

7. The satellite alignment method according to any one of claims 1 to 6, wherein the satellite ephemeris information comprises ephemeris information of the target satellite; and the method further comprises:

obtaining motion information of the target satellite based on the ephemeris information of the target satellite;
obtaining a second location of the target satellite at a second moment based on the ephemeris information of the target satellite, wherein the second location is associated with the motion information of the target satellite, the second moment is any moment after a first moment, and a location of the target satellite at the first moment is the first location;
obtaining a second phase difference at the second moment based on the ephemeris information of the target satellite; and
generating a second beam based on the second phase difference, wherein the second beam is directed to the second location at the second moment.

8. The satellite alignment method according to any one of claims 1 to 7, wherein the satellite ephemeris information is sent by the target satellite to the terminal device through a non-terrestrial network.

9. The satellite alignment method according to any one of claims 1 to 7, wherein the satellite ephemeris information comprises ephemeris information of a plurality of satellites, and the obtaining the first location of the target satellite based on the satellite ephemeris information comprises:

determining the target satellite and the first location of the target satellite from the plurality of satellites based on the satellite ephemeris information, wherein
the target satellite is a satellite in the plurality of satellites that meets a preset condition, and the preset condition comprises one or more of the following conditions: having a closest distance to the terminal device, a signal received by the terminal device being strongest, and having a historical record of alignment with the terminal device.

10. The satellite alignment method according to claim 9, wherein the satellite ephemeris information is sent by an access network device to the terminal device through a terrestrial network.

11. A terminal device, wherein the terminal device comprises:
a processor, configured to execute computer program instructions, to support the terminal device in implementing the method according to any one of claims 1 to 10.

12. A computer-readable storage medium, wherein the computer-readable storage medium stores computer program instructions, and when the computer program instructions are executed by a processing circuit, the method according to any one of claims 1 to 10 is implemented.

13. A computer program product comprising instructions, wherein when the computer program product runs on a computer, the computer is caused to perform the method according to any one of claims 1 to 10.

14. A chip system, wherein the chip system comprises a processing circuit and a storage medium, the storage medium stores computer program instructions, and when the computer program instructions are executed by the processing circuit, the method according to any one of claims 1 to 10 is implemented.

15. A terminal device, wherein the terminal device comprises a unit or a module configured to implement the method according to any one of claims 1 to 10.

FIG. 1

100a

300

100b

(a)

200a

400

300

100a

100b

(b)

200a

200b

100b

400

100a

(c)

FIG. 2

Terminal device 100

FIG. 3

During initial alignment, determine a first location of a target satellite based on satellite ephemeris information sent by an access network device — S401

Obtain a first phase difference based on the satellite ephemeris information — S402

Generate a first beam based on the first phase difference — S403

FIG. 4

0-degree longitude

FIG. 5

FIG. 6

FIG. 7

Second direction

First direction

(a)

(b)

FIG. 8

First
direction

Long
edge

Short edge

Second direction

(a)

Second
direction

Long
edge

Short edge

First direction

(b)

FIG. 9

Generate an initial beam based on a first phase difference — S4031

Notify a user of a second angle — S4032

Receive an adjustment performed by the user on a direction angle of the initial beam based on the second angle, to obtain a first beam — S4033

FIG. 10

The beam direction elevation is A, and the current elevation is B

FIG. 11

The current elevation is within the preset range, and the adjustment ends

FIG. 12

Obtain motion information of a target satellite based on ephemeris information of the target satellite — S501

Obtain a second location of the target satellite at a second moment based on the ephemeris information of the target satellite — S502

Obtain a second phase difference at the second moment based on the ephemeris information of the target satellite — S503

Generate a second beam based on the second phase difference — S504

FIG. 13

Obtain updated ephemeris information sent by a target satellite through a non-terrestrial network — S601

Obtain a third location of the target satellite based on the updated ephemeris information sent by the target satellite — S602

Obtain a third phase difference based on the updated ephemeris information sent by the target satellite — S603

Generate a third beam based on the third phase difference — S604

FIG. 14

## INTERNATIONAL SEARCH REPORT

International application No.

**PCT/CN2024/104450**

### A. CLASSIFICATION OF SUBJECT MATTER

H04B7/06(2006.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, ENTXTC, ENTXT, CNABS, WPABS, WPABSC, IEEE, CNKI: 对星, 对准, 卫星, 终端, 手机, 天线, 波束, 指向, 方向, 相位, 相位差, 天线阵列, 天线元件, 方位角, 倾角, 仰角, 俯角, 夹角, 位置, 星历, alignment, satellite, terminal, +phone, antenna, beam, point+, direction, phase, phase difference, antenna array, antenna element, azimuth, inclination, elevation, angle, position, location, coordinate, ephemeris

### C. DOCUMENTS CONSIDERED TO BE RELEVANT

| Category* | Citation of document, with indication, where appropriate, of the relevant passages | Relevant to claim No. |
|---|---|---|
| Y | CN 115939758 A (HUBEI XINGJI TIMES TECHNOLOGY CO., LTD.) 07 April 2023 (2023-04-07) description, paragraphs [0043]-[0172] | 1-15 |
| Y | US 2019089419 A1 (LG ELECTRONICS INC.) 21 March 2019 (2019-03-21) description, paragraphs [0009] and [0062]-[0066] | 1-15 |
| Y | US 10651920 B1 (CTH LENDING COMPANY, LLC) 12 May 2020 (2020-05-12) description, column 13, line 5 to column 33, line 47 | 1-15 |
| A | CN 114142234 A (CHONGQING LIANGJIANG SATELLITE MOBILE COMMUNICATION CO., LTD.) 04 March 2022 (2022-03-04) entire document | 1-15 |
| A | CN 115706601 A (HUAWEI TECHNOLOGIES CO., LTD.) 17 February 2023 (2023-02-17) entire document | 1-15 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 September 2024** | **10 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/104450**

| C. | DOCUMENTS CONSIDERED TO BE RELEVANT | |
|---|---|---|
| Category* | Citation of document, with indication, where appropriate, of the relevant passages | Relevant to claim No. |
| A | CN 114513243 A (BEIJING RESEARCH INSTITUTE OF TELEMETRY et al.) 17 May 2022 (2022-05-17)<br>    entire document | 1-15 |

Form PCT/ISA/210 (second sheet) (July 2022)

**INTERNATIONAL SEARCH REPORT**
**Information on patent family members**

International application No.

**PCT/CN2024/104450**

| Patent document cited in search report | | | Publication date (day/month/year) | Patent family member(s) | | | Publication date (day/month/year) |
|---|---|---|---|---|---|---|---|
| CN | 115939758 | A | 07 April 2023 | None | | | |
| US | 2019089419 | A1 | 21 March 2019 | KR | 20180025066 | A | 08 March 2018 |
| | | | | KR | 20180044864 | A | 03 May 2018 |
| | | | | WO | 2018043808 | A1 | 08 March 2018 |
| US | 10651920 | B1 | 12 May 2020 | EP | 3787199 | A1 | 03 March 2021 |
| CN | 114142234 | A | 04 March 2022 | None | | | |
| CN | 115706601 | A | 17 February 2023 | WO | 2023011602 | A1 | 09 February 2023 |
| | | | | EP | 4362350 | A1 | 01 May 2024 |
| CN | 114513243 | A | 17 May 2022 | None | | | |

Form PCT/ISA/210 (patent family annex) (July 2022)

**REFERENCES CITED IN THE DESCRIPTION**

**Patent documents cited in the description**

- CN 202311095135